# EUROPEAN PATENT SPECIFICATION

(11) **EP 3 321 752 B1**
(45) Date of publication and mention of the grant of the patent: **06.11.2019**
(21) Application number: 17192649.6
(22) Date of filing: 22.09.2017
(51) Int. Cl.: G05B 19/042, G05B 19/425

(54) **CONTROLLER, CONTROL METHOD FOR CONTROLLER, AND INFORMATION PROCESSING PROGRAM**
STEUERGERÄT, STEUERUNGSVERFAHREN FÜR DAS STEUERGERÄT UND INFORMATIONSVERARBEITUNGSPROGRAMM
CONTRÔLEUR, PROCÉDÉ DE COMMANDE POUR CONTRÔLEUR ET PROGRAMME DE TRAITEMENT D'INFORMATIONS

(30) Priority: 11.11.2016 JP 2016220889
(43) Date of publication of application: 16.05.2018
(73) Proprietor: Omron Corporation, Kyoto-shi, Kyoto 600-8530 (JP)
(72) Inventor: SEKIMOTO, Hidehiko, Kyoto-shi, Kyoto 600-8530 (JP); SUGIYAMA, Hayato, Kyoto-shi, Kyoto 600-8530 (JP)
(74) Representative: Horn Kleimann Waitzhofer Patentanwälte PartG mbB

(56) References cited:
- US-A1- 2003 222 905
- US-A1- 2009 064 022
- US-A1- 2012 265 330

## Description

### FIELD

The present invention relates to, for example, a controller that records and uses a user operation for a manufacturing device or a testing device.

### BACKGROUND

A device known in the art records the operational details of an apparatus, such as programs to be executed by the apparatus, and provides such recorded operational details for a user to perform an intended operation of the apparatus.

For example, Patent Literature 1 below describes a plant monitoring controller that collects program execution procedures and allows use of such information to promptly identify a cause of a failure or a failure status.

### CITATION LIST

### PATENT LITERATURE

Patent Literature 1: Japanese Unexamined Patent Application Publication No. 5-265540 (published on October 15, 1993)

US 2003/0222905 A1 discloses a recipe recorder for an automated chemistry system that allows to automatically record and automatically replay steps taken by a chemist during a particular experiment. US 2012/0265330 A1 discloses an interaction unit which allows a manual interaction that is associated with a visualization unit, and a function selection unit which allows an association of a function of a machine tool with this manual interaction is associated with the visualization unit, and that a function data generator unit is provided that generates operating data which correspond to the manual interaction, while taking the associated function into account, and transmits these operating data to a visualization controller in order to represent, on the visualization unit, using visualization elements, the function specified by the manual interaction. US 2009/0064022 A1 discloses an information processing apparatus including an LCD and a touch panel, wherein the LCD displays a plurality of operation items making up a series of operating procedures, wherein a current operation item is highlighted.

### SUMMARY

### TECHNICAL PROBLEM

With the above technique for recording and using program execution procedures, the recorded operational details may not be readily understandable by some users who perform intended operations of the apparatus, such as foreign workers or inexperienced workers who are unfamiliar with the programs.

One or more aspects of the present invention are directed to a controller that allows recording and use of user operations that are intuitively understandable to users instead of, for example, program execution procedures.

### SOLUTION TO PROBLEM

In response to the above issue, one aspect of the present invention provides a controller including a recording unit that records a series of operations including one or more user operations performed on a manufacturing device or a testing device together with a procedure, and a processing instruction unit that causes the manufacturing device or the testing device to perform processing assigned to each of the one or more user operations recorded by the recording unit by following the procedure recorded by the recording unit.

In the above structure, the processing instruction unit causes the manufacturing device or the testing device to perform processing assigned to each of the one or more user operations performed on the manufacturing device or the testing device recorded by the recording unit by following the procedure recorded by the recording unit.

The controller thus records the series of operations performed on the manufacturing device or the testing device together with their procedure. The controller can cause the manufacturing device or the testing device to perform processing assigned to each recorded user operation by following the recorded procedure.

In the controller according to the above aspect, the recording unit may record, together with a procedure, a series of operations designated by a user.

In the above structure, the recording unit records the series of operations designated by the user together with their procedure. Thus, the controller can record any series of operations performed on the manufacturing device or the testing device together with their procedure.

The controller according to the above aspect further includes a display that displays information indicating each of the one or more user operations and information indicating the procedure recorded by the recording unit.

In the above structure, the display displays information indicating each of the one or more user operations performed on the manufacturing device or the testing device recorded by the recording unit together with information indicating their procedure. The controller thus records the series of operations performed on the manufacturing device or the testing device together with their procedure. The controller can display information indicating each of the one or more recorded user operations together with information indicating the recorded procedure.

In the controller according to the above aspect, when a first user operation included in the series of operations recorded by the recording unit is performed, the display may emphasize information indicating a second user operation following the first user operation in the series of operations recorded by the recording unit.

In the above structure, the display emphasizes information indicating the second user operation following the first user operation in the series of operations when the first user operation included in the series of operations recorded by the recording unit is performed. The controller can thus record the series of operations performed on the manufacturing device or the testing device together with their procedure, and when a first user operation included in the recorded series of operations is performed, the display can emphasize information indicating a second user operation following the first user operation in the series of operations. More specifically, when one user operation included in the series of operations recorded together with their procedure is performed, the controller can emphasize information indicating the next user operation to notify the user of the next user operation.

In the controller according to the above aspect, the display may display information indicating an ordinal position of each of the one or more user operations recorded by the recording unit in the series of operations recorded by the recording unit, and information indicating each of the one or more user operations recorded by the recording unit.

In the above structure, the display displays information indicating the ordinal position of each of the one or more user operations recorded by the recording unit in the series of operations recorded by the recording unit, and information indicating each of the one or more user operations recorded by the recording unit.

The controller can thus display information indicating the total number of user operations included in the series of operations recorded by the recording unit together with their procedure. The controller can also display information indicating the ordinal position of one user operation in the series of operations.

The controller according to the above aspect further includes a receiving unit that receives a processing instruction operation for instructing the processing instruction unit to cause the manufacturing device or the testing device to perform processing assigned to each of the one or more user operations recorded by the recording unit by following the procedure recorded by the recording unit. When the receiving unit receives the processing instruction operation, the processing instruction unit may cause the manufacturing device or the testing device to perform processing assigned to each of the one or more user operations by following the procedure recorded by the recording unit.

In the above structure, when the receiving unit receives the processing instruction operation, the processing instruction unit causes the manufacturing device or the testing device to perform processing assigned to each of the one or more user operations recorded by the recording unit by following the procedure recorded by the recording unit.

The controller thus records the series of operations performed on the manufacturing device or the testing device together with their procedure. When receiving the processing instruction operation, the controller can cause the manufacturing device or the testing device to perform processing assigned to each of the one or more user operations recorded by the recording unit by following the procedure recorded by the recording unit.

In the controller according to the above aspect, the receiving unit is further configured to receive the processing instruction operation from another controller.

In the above structure, the receiving unit receives a processing instruction operation from a controller other than its controller. The controller thus records the series of operations performed on the manufacturing device or the testing device together with their procedure. When receiving the processing instruction operation from the controller other than its controller, the receiving unit can cause the manufacturing device or the testing device to perform processing assigned to each of the one or more user operations recorded by the recording unit by following the procedure recorded by the recording unit. For example, the controller can receive a processing instruction operation from another controller that is installed away from its controller, and cause the manufacturing device or the testing device to perform the processing assigned to each of the one or more user operations by following the procedure.

In the controller according to the above aspect, the recording unit may further store a time interval between two user operations included in the series of operations recorded by the recording unit.

In the above structure, the recording unit can further store a time interval between two user operations included in the series of operations recorded by the recording unit. The controller can thus record the series of operations performed on the manufacturing device or the testing device together with their procedure, and can further store the time interval between two user operations included in the recorded series of operations. For example, the user operations performed on the manufacturing device or the testing device may include operations to be performed only at specific times, such as while the manufacturing device or the testing device is performing a specific operation. The controller can thus store the timing appropriate for such user operations included in the series of operations performed on the manufacturing device or the testing device.

In response to the above issue, another aspect of the present invention provides a control method for a controller including recording a series of operations including one or more user operations performed on a manufacturing device or a testing device together with a procedure, and causing the manufacturing device or the testing device to perform processing assigned to each of the one or more user operations recorded in the recording process by following the procedure recorded in the recording process.

### ADVANTAGEOUS EFFECTS

These aspects of the present invention allow recording and use of user operations that are intuitively understandable to users instead of, for example, program execution procedures.

### BRIEF DESCRIPTION OF THE DRAWINGS

Fig. 1 is a block diagram showing the main components of a human machine interface (HMI) according to a first embodiment of the present invention.
Fig. 2 is a diagram showing the overview of a control system according to the first embodiment.
Fig. 3 is a diagram describing a procedure with which the HMI shown in Fig. 1 records a user operation.
Fig. 4 is a diagram describing a procedure for the HMI shown in Fig. 1 performing processing assigned to each recorded user operation.
Fig. 5 is a diagram describing user operations to be recorded by the HMI shown in Fig. 1 together with their operation times.
Fig. 6 is a diagram describing another user operation to be recorded by the HMI shown in Fig. 1 together with its operation time, different from the user operation shown in Fig. 5.
Fig. 7 is a diagram describing user operations to be recorded by the HMI shown in Fig. 1 without their operation times.
Fig. 8 is a block diagram showing the main components of an HMI according to a second embodiment of the present invention.
Fig. 9 is a diagram describing processing performed by the HMI shown in Fig. 8 when a problem occurs.
Fig. 10 is a diagram describing the procedure for selecting one of user operations recorded by the HMI shown in Fig. 8 and the HMI performing processing assigned to the selected user operation.
Fig. 11 is a diagram describing the procedure for selecting one of user operations recorded by the HMI shown in Fig. 8 and the HMI displaying the selected user operation.
Fig. 12 is a diagram describing the HMI shown in Fig. 8 displaying the recorded user operations in time sequence together with the corresponding operator names.
Fig. 13 is a diagram describing an example table showing the operation history list shown in Fig. 12 displayed through filtering.
Fig. 14 is a diagram describing a procedure for selecting one of user operations recorded by the HMI shown in Fig. 8 and the HMI displaying a guidance for the selected user operation.
Fig. 15 is a diagram describing an example of processing performed by the HMI shown in Fig. 8 to prevent a user from performing an operation different from the displayed details during guidance display.
Fig. 16 is a diagram describing another example of processing performed by the HMI shown in Fig. 8 to prevent a user from performing an operation different from the displayed details during guidance display.
Fig. 17 is a diagram describing another example of processing performed by the HMI shown in Fig. 8 to prevent a user from performing an operation different from the displayed details during guidance display.
Fig. 18 is a diagram describing another example of processing performed by the HMI shown in Fig. 8 to prevent a user from performing an operation different from the displayed details during guidance display.
Fig. 19 is a block diagram showing the main components of an HMI according to a third embodiment of the present invention.
Fig. 20 is a diagram showing the overview of a control system according to the third embodiment.

### DETAILED DESCRIPTION

### First Embodiment

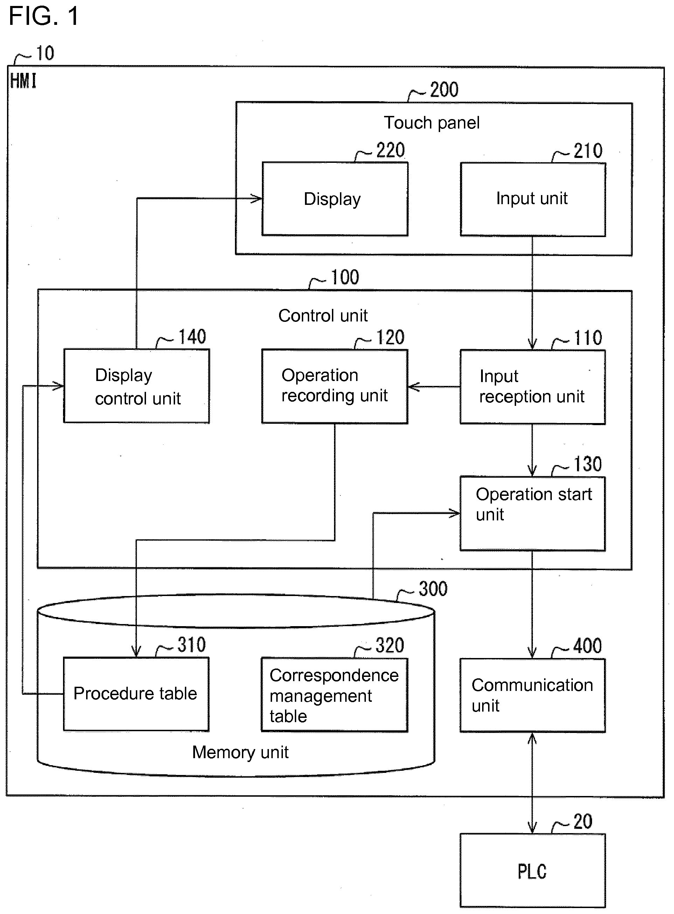

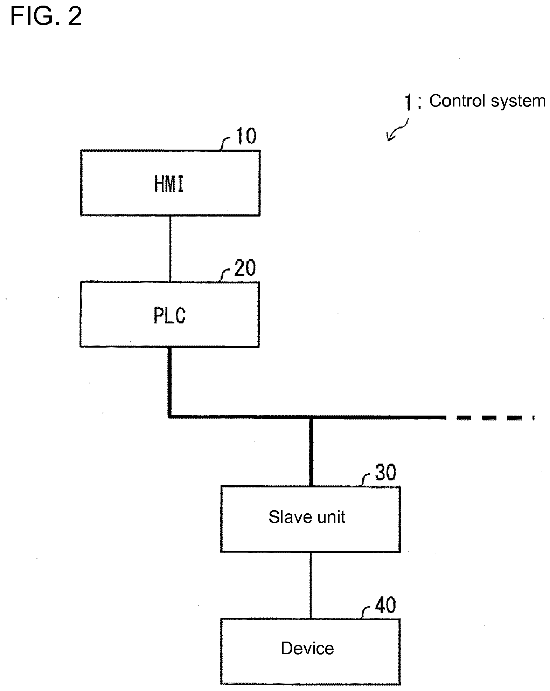

A first embodiment of the present invention will now be described in detail with reference to Figs. 1 to 7. The same or corresponding components are given the same reference numerals, and will not be described repeatedly. For easy understanding of a human machine interface (HMI) 10 (controller) according to one embodiment of the present invention, the overview of a control system 1 including the HMI 10 is described first with reference to Fig. 2. Although the controller is a human machine interface (HMI) in one embodiment described blow, the controller may not be an HMI.

### Overview of Control System According to First Embodiment

Fig. 2 is a diagram showing the overview of the control system 1. As shown in Fig. 2, the control system 1 is a master-slave control system including a programmable logic controller (PLC) 20, which serves as a master unit, and at least one slave unit 30, which is connected to the master unit through a network. The master unit and the slave unit are defined for the control functions of data transmission through the network connecting the PLC 20 and the slave unit 30. This relationship does not limit information transmitted between the master unit and the slave unit.

The PLC 20 manages data transmission to and from the slave unit 30 through the network and thus is referred to as a master unit. The PLC 20 obtains, as input data, information from a device 40, which is an input device such as a sensor, and performs a computing operation using the input data from the device 40 in accordance with a preinstalled user program. The PLC 20 then performs the operation to determine the control over the device 40, which is an output device such as an actuator, and outputs control data involving the control details to the device 40 through the slave unit 30.

The network connecting the PLC 20 and the slave unit 30 carries various types of data transmitted to and received from the PLC 20. The network connecting the PLC 20 to the slave unit 30 may be, for example, EtherCAT (registered trademark), PROFINET (registered trademark), MECHATROLINK (registered trademark) -III, Powerlink, SERCOS (registered trademark) -III, or CIP Motion. The network connecting the PLC 20 and the slave unit 30 may be another network such as EtherNet/IP (registered trademark), DeviceNet, or CompoNet (registered trademark).

In the control system 1 described below, data is transmitted and received between the PLC 20 and the slave unit 30 by sequentially transferring data frames on the network connecting the PLC 20 and the slave unit 30.

The network connecting the PLC 20 and the slave unit 30 is herein also referred to as an upper bus (upper communication network), in comparison with a network connecting the slave unit 30 and the device 40. The network connecting the slave unit 30 and the device 40 is also referred to as a lower bus (lower communication network), in comparison with the upper bus (upper communication network).

The slave unit 30 is a relay through which data is transmitted and received between the PLC 20 and the device 40. The slave unit 30 is, for example, a motor controller serving as an output unit that provides a control instruction from the PLC 20 to its output destination device 40. The slave unit 30 may be a device-communication management unit serving as an input unit, through which the PLC 20 obtains the state of the input source device 40. At least one device 40 is connected to the slave unit 30 with a communication cable.

The device 40 may be an input source device, such as a sensor (e.g., a temperature sensor or an optical sensor) or a switch (e.g., a press button switch, a limit switch, or a pressure switch), or may be an output destination device, such as an actuator, a relay, an electromagnetic valve, or a display. In the control system 1, the PLC 20 controls the operation of the device 40, and receives output data from the device 40 through the slave unit 30. In other words, the device 40 is a manufacturing device or a testing device having its operation controlled by the HMI 10 through the PLC 20 and the slave unit 30.

As shown in Fig. 2, the HMI 10 is connected to the PLC 20 through, for example, a universal serial bus (USB) cable.

The HMI 10 enables communication of information between a human and a machine, and specifically is used by a human to operate a machine (provide an instruction to a machine) or provides information about the current state of the machine or the obtained result to a human. The units in the HMI 10 that are used by a human to provide an instruction to a machine include a switch, a button, a handle, a dial, a pedal, a remote controller, a microphone, a keyboard, and a mouse. The units in the HMI 10 that are used by a machine to provide information about, for example, the current state of the machine or the obtained result to a human include a liquid crystal display, a meter, a lamp, and a speaker. The HMI 10 described below is a controller including a touch panel display.

### HMI

The control system 1 and the devices included in the control system 1 (the HMI 10, the PLC 20, the slave unit 30, and the device 40) are described briefly with reference to Fig. 2. The structure of the HMI 10 included in the control system 1 and its processing details will now be described with reference to Fig. 1 and other drawings. Before the HMI 10 is described in detail with reference to Fig. 1, the overview will be described for easy understanding of the HMI 10.

### HMI Overview

The HMI 10 includes an operation recording unit 120 (recording unit), which records a series of operations (operations recorded in a procedure file that is described later) including one or more user operations to be performed on the device 40 (a manufacturing device or a testing device) together with their procedure, and an operation start unit 130 (processing instruction unit), which instructs the device 40 to perform the processing assigned to each of the one or more user operations recorded by the operation recording unit 120 by following the procedure recorded by the operation recording unit 120. The operation start unit 130 with the above structure instructs the device 40 to perform processing assigned to each of the one or more user operations on the device 40 recorded by the operation recording unit 120 by following the procedure recorded by the operation recording unit 120.

The HMI 10 thus records a series of operations to be performed on the device 40 together with their procedure. The HMI 10 instructs the device 40 to perform processing assigned to each of the user operations by following the recorded procedure.

The structure of the HMI 10 described briefly above will now be described in more detail with reference to Fig. 1.

### HMI Details

Fig. 1 is a block diagram showing the main components of the HMI 10. The HMI 10 shown in Fig. 1 includes a control unit 100, a touch panel 200, a memory unit 300, and a communication unit 400. To simplify explanation, components that are not directly related to the present embodiment are not shown in the block diagram and will not be described. The HMI 10 may include such components that are not shown in the figure as appropriate.

The touch panel 200 includes an input unit 210 and a display 220. In the present embodiment, the input unit 210 and the display 220 are integrated into the touch panel 200.

The input unit 210 allows a user to input an instruction signal for operating the HMI 10 through the touch panel 200. The input unit 210 includes a touch surface and a touch sensor. The touch surface allows contact with a pointer (a tool that points on a screen position on the display 220, which is for example a finger or a pen). The touch sensor detects contact/noncontact (access/no access) of the pointer with the touch surface and the position of its contact (access). The touch sensor may be any sensor that can detect contact/noncontact of the pointer with the touch surface. For example, the touch sensor may be a pressure sensor, a capacitance sensor, or an optical sensor.

The display 220 displays, for example, objects for which the HMI 10 processes information and a graphical user interface (GUI) screen that allows a user to operate the HMI 10. The display 220 is, for example, a liquid crystal display (LCD). To simplify explanation, software buttons (software buttons created using software) to appear on the display 220 may hereafter be simply referred to as buttons. For example, a software button for starting a recording operation may simply be referred to as a record start button.

The control unit 100 collectively controls the functions of the HMI 10. In the figure, the control unit 100 includes, as its functional blocks, an input reception unit 110, an operation recording unit 120, an operation start unit 130, and a display control unit 140. The functional blocks of the control unit 100 described above can be implemented by, for example, a central processing unit (CPU) reading a program stored in a storage (memory unit 300), such as a read only memory (ROM) or a non-volatile random access memory (NVRAM), into a random access memory (RAM) (not shown), and executing the program.

The input reception unit 110 receives an operation signal that is input to the HMI 10 in response to a user operation performed on the touch panel 200 (specifically, a user touch operation). The input reception unit 110 obtains the operation signal output from the touch sensor of the input unit 210, and determines the type of the touch operation (e.g., tap, flick, pinch, or drag) for each item of information appearing on the display 220 and the position of the touch operation. The input reception unit 110 then determines (identifies) the details of the user operation received by the touch panel 200 based on information appearing on the display 220 and information about the type and the position of the touch operation. The input reception unit 110 then provides the obtained results, or specifically the information indicating the user operation received by the touch panel 200 to the operation recording unit 120 and the operation start unit 130. For example, the input reception unit 110 identifies the user operation of pressing a software button appearing on the touch panel 200 (or the display 220) as controlled by the display control unit 140, and provides information about the identified user operation to the operation recording unit 120 and the operation start unit 130.

The operation recording unit 120 obtains, from the input reception unit 110, information about the user operation received by the touch panel 200. The operation recording unit 120 records information about each user operation obtained from the input reception unit 110 into a procedure file in the order in which each user operation is obtained from the input reception unit 110. In other words, the operation recording unit 120 records one or more user operations received by the touch panel 200 into a procedure file in the order in which the user operations are received by the touch panel 200. More specifically, the operation recording unit 120 generates a procedure file using information about one or more user operations received by the touch panel 200 and their procedure. The operation recording unit 120 may further obtain, from the input reception unit 110, the operation time at which the touch panel 200 has received each user operation (the time at which each user operation occurs), or information about the operator of each user operation received by the touch panel 200. In addition to the information about the user operations and their procedure, the operation recording unit 120 may further record the operation time and/or the operator information for each user operation into the procedure file. The operation recording unit 120 stores the generated procedure file into a procedure table 310. The operation time may be an operation duration (a duration taken to perform processing assigned to the operation).

The procedure file is the log data for user operations received by the touch panel 200. The procedure file contains information about the details of the user operations received by the touch panel 200 and their procedure. For example, the procedure file contains, for one or more software buttons appearing on the display 220 controlled by the display control unit 140, information about software buttons that have been pressed and the order in which the software buttons were pressed. The procedure file may further contain information about the operators of the user operations received by the touch panel 200 (the user ID, the name, or the department of the user who performed each user operation). The procedure file may further contain the operation time (the occurrence time) of each user operation received by the touch panel 200, or information about the time interval between two user operations.

The operation start unit 130 generates an instruction signal for causing the device 40 to perform the processing assigned to each user operation contained in the procedure file by following the procedure stored in the procedure file. More specifically, the operation start unit 130 first obtains an intended procedure file by referring to the procedure table 310. The operation start unit 130 obtains the user operations from the obtained procedure file by following the procedure stored in the procedure file. The operation start unit 130 obtains a control signal associated with the obtained user operation (control signal for causing the device 40 to perform processing assigned to the obtained user operation) by referring to a correspondence management table 320. The operation start unit 130 provides the obtained control signal to the communication unit 400.

The display control unit 140 transmits information obtained through information processing performed by each unit included in the control unit 100 on the screen of the display 220, and converts the information into a video signal, and provides the signal to the display 220. The display control unit 140 displays, for example, software buttons on the touch panel 200, or specifically on the display 220.

The memory unit 300 is a storage for various types of data used by the HMI 10. The memory unit 300 may store, in a non-temporary manner, (1) a control program and (2) an OS program, which are executed by the control unit 100 in the HMI 10, (3) an application program executed by the control unit 100 to enable various functions of the HMI 10, and (4) various types of data to be read when the application program is executed. The data items (1) to (4) are stored in, for example, a nonvolatile storage such as a read only memory (ROM), a flash memory, an erasable programmable ROM (EPROM), an electrically EPROM (EEPROM, registered trademark), or a hard disk drive (HDD). The HMI 10 may include a temporary memory unit (not shown). The temporary memory unit is a working memory that temporarily stores, for example, data for a computing operation and its operation results during processing performed by the HMI 10. The temporary memory unit is a volatile storage such as a random access memory (RAM). The data item(s) to be stored in each of these storage units is determined as appropriate based on, for example, the use purpose, convenience, cost, or physical limitations of the HMI 10. The memory unit 300 further stores the procedure table 310 and the correspondence management table 320.

The procedure table 310 stores a procedure file, which is log data for user operations received by the touch panel 200. The procedure file contains the details of the user operations received by the touch panel 200 and their procedure, and may also contain information about the operator of each user operation. The procedure file may also contain information about the time interval between two user operations contained in the procedure file.

The correspondence management table 320 stores user operations and control signals for causing the device 40 to perform processing assigned to the corresponding user operations. The correspondence management table 320 stores, for example, control signals associated with one or more software buttons appearing on the touch panel 200 controlled by the display control unit 140.

The communication unit 400 receives, from the PLC 20, information (status information) indicating the status of at least one of the PLC 20, the slave unit 30, and the device 40. The communication unit 400 transmits a control signal (a control signal for causing the device 40 to perform the processing assigned to the user operation) obtained from the operation start unit 130 to the PLC 20. The control signal transmitted from the communication unit 400 to the PLC 20 is transmitted by the PLC 20 to the device 40 through the slave unit 30. The device 40 then performs the processing assigned to the user operation in accordance with the control signal.

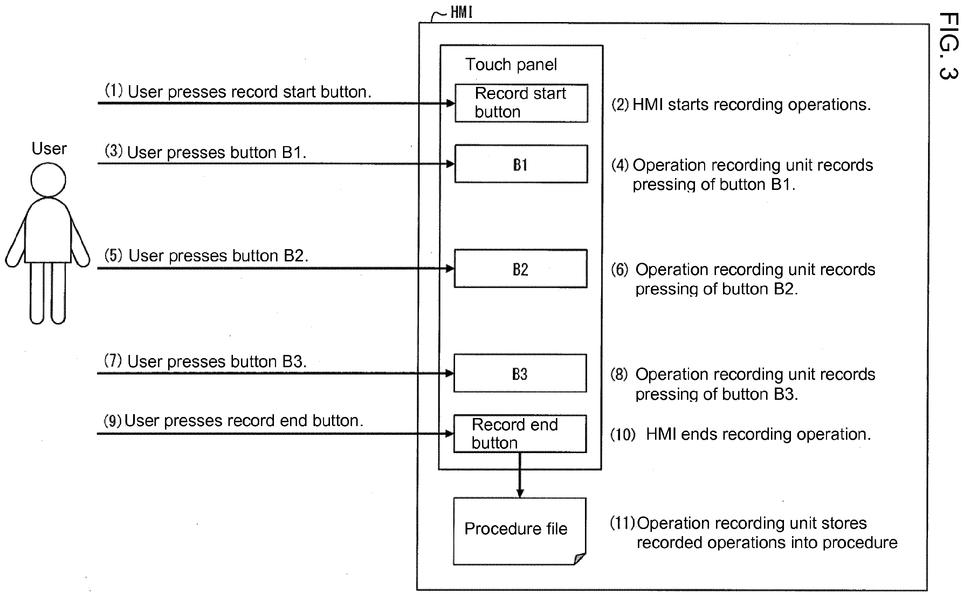

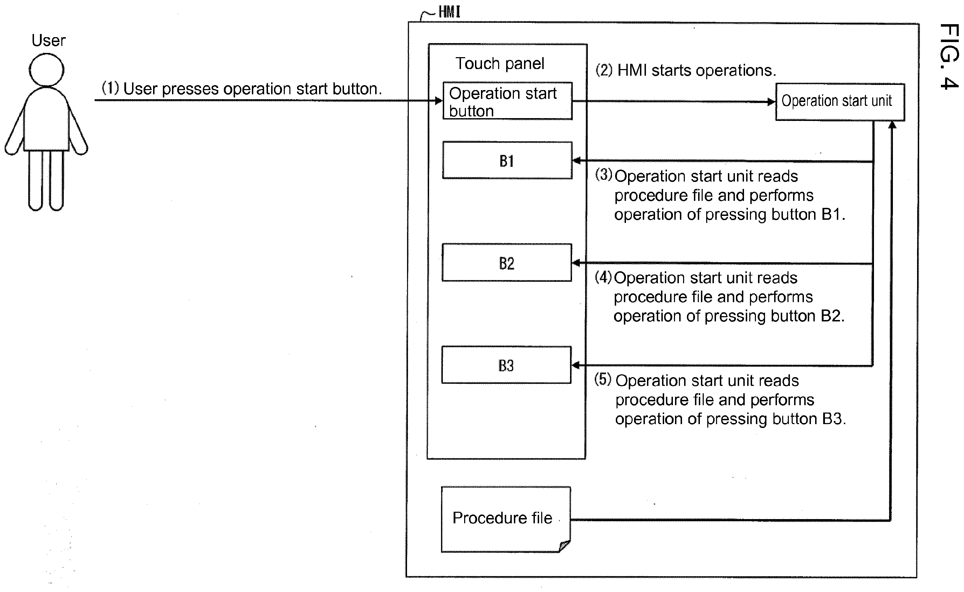

The use of the HMI 10 with the above structure will now be described with reference to Figs. 3 and 4.

### Recording User Operation with HMI

Fig. 3 is a diagram describing the procedure with which the HMI 10 records user operations. As shown in Fig. 3, (1) a user presses a record start button, which is a software button appearing on the touch panel 200 (or the display 220) controlled by the display control unit 140. (2) The HMI 10 detects the user operation of pressing the record start button, and starts recording the operation. More specifically, the input reception unit 110, which has detected the user operation of pressing the record start button appearing on the touch panel 200, instructs the operation recording unit 120 to perform the process described below. The input reception unit 110 instructs the operation recording unit 120 to generate a procedure file storing, as a series of operations, user operations performed during a period from when the record start button is pressed to when a record end button is pressed.

(3) The user presses a button B1, which is a software button appearing on the touch panel 200 controlled by the display control unit 140. (4) When the input reception unit 110 detects the user operation of pressing the button B1, the operation recording unit 120 records the user operation of pressing the button B1 into the procedure file. (5) The user presses the button B2 after pressing the button B1. (6) When the input reception unit 110 detects the user operation of pressing the button B2 after pressing the button B1, the operation recording unit 120 records the user operation of pressing the button B2 into the procedure file as the user operation following the user operation of pressing the button B1. (7) The user then presses a button B3. (8) When the input reception unit 110 detects the user operation of pressing the button B3, the operation recording unit 120 records the user operation of pressing the button B3 into the procedure file as the user operation following the user operation of pressing the button B2.

(9) The user then presses the record end button. (10) The HMI 10 detects the user operation of pressing the record end button, and ends recording the operation. More specifically, the input reception unit 110, which has detected the user operation of pressing the record end button appearing on the touch panel 200, instructs the operation recording unit 120 to perform the process described below. The input reception unit 110 instructs the operation recording unit 120 to store, in the procedure table 310, the procedure file generated during a period from when the record start button is pressed to when the record end button is pressed. (11) The operation recording unit 120 stores the recorded operational details, or specifically the information indicating one or more user operations performed during the period from when the record start button is pressed to when the record end button is pressed together with their procedure into a procedure file, and stores the procedure file into the procedure table 310.

More specifically, the operation recording unit 120 stores, into the procedure table 310, the procedure file storing the procedure indicating that pressing the button B1 is followed by pressing the button B2, and pressing the button B2 is followed by pressing the button B3. The operation recording unit 120 may additionally store, into the procedure file, information about users (operator information) who pressed the buttons B1, B2, and B3. The operation recording unit 120 may additionally store, into the procedure file, the operation intervals between the user operations of pressing the button B1, pressing the button B2, and pressing the button B3. The operation recording unit 120 may additionally store, into the procedure file, for example, the operation times (the occurrence times) of the user operations of pressing the button B1, pressing the button B2, and pressing the button B3.

The HMI 10 described with reference to Fig. 3 will now be summarized. The operation recording unit 120 (recording unit) in the HMI 10 records a series of operations (operations performed during a period from when the record start button is pressed to when the record end button is pressed) designated by a user together with their procedure. The operation recording unit 120 with the above structure thus records a series of operations designated by a user together with their procedure. The HMI 10 can record any series of operations on the device 40 together with their procedure.

### HMI Performing Processing Assigned to Recorded User Operation

Fig. 4 is a diagram describing the procedure for the HMI 10 performing the processing assigned to each recorded user operation. In the example described below, a user has already designated a procedure file generated by the HMI 10 in Fig. 3. More specifically, the user has already designated a procedure file that contains information indicating the three user operations of pressing the button B1, pressing the button B2, and pressing the button B3, together with information about the procedure indicating that pressing the button B1 is followed by pressing the button B2, and pressing the button B2 is followed by pressing the button B3.

As shown in Fig. 4, (1) the user designates an intended procedure file, and presses an operation start button. (2) The HMI 10 detects the user operation of pressing the operation start button, and starts the operation. More specifically, the input reception unit 110, which has detected the user operation of pressing the operation start button appearing on the touch panel 200, instructs the operation start unit 130 to perform the process described below. The input reception unit 110 instructs the operation start unit 130 to cause the device 40 to perform the processing assigned to the user operations included in the procedure file designated by the user by following the procedure stored in the procedure file designated by the user.
(3) The operation start unit 130 reads the procedure file designated by the user by referring to the procedure table 310. The operation start unit 130 first determines that the user operation of pressing the button B1 is performed in the read procedure file, and then performs the user operation of pressing the button B1. More specifically, the operation start unit 130 obtains a control signal associated with the user operation of pressing the button B1 (a control signal for causing the device 40 to perform the processing assigned to the user operation of pressing the button B1) by referring to the correspondence management table 320. The operation start unit 130 provides the obtained control signal to the communication unit 400, and causes the device 40 to perform the processing assigned to the user operation of pressing the button B1 through the PLC 20 and the slave unit 30.
(4) As in process (3), the operation start unit 130 reads the procedure file designated by the user, and determines that the user operation of pressing the button B1 is followed by the user operation of pressing the button B2 in the read procedure file. The operation start unit 130 then performs the user operation of pressing the button B2. More specifically, the operation start unit 130 obtains a control signal associated with the user operation of pressing the button B2, and causes the device 40 to perform the processing assigned to the user operation of pressing the button B2 through the PLC 20 and the slave unit 30.
(5) As in processes (3) and (4), the operation start unit 130 reads the procedure file designated by the user, and determines that the user operation of pressing the button B2 is followed by the user operation of pressing the button B3 in the read procedure file. The operation start unit 130 then performs the user operation of pressing the button B3. More specifically, the operation start unit 130 obtains a control signal associated with the user operation of pressing the button B3, and causes the device 40 to perform the processing assigned to the user operation of pressing the button B3 through the PLC 20 and the slave unit 30.

The processing performed by the HMI 10 described above with reference to Figs. 3 and 4 will now be summarized. The processing performed by the HMI 10 is a control method for the HMI 10 (controller). The control method includes a recording process of recording a series of operations including one or more user operations on the device 40 (e.g., operations performed during a period from when the record start button is pressed to when the record end button is pressed in Fig. 3) together with their procedure, and a processing instruction process for causing the device 40 to perform the processing assigned to each of the one or more user operations recorded in the recording process (e.g., processes (3) to (5) performed by the HMI 10 in Fig. 4) by following the procedure recorded in the recording process.

### Informing User of Automatically-performed User Operation

As described above with reference to Fig. 4, the operation start unit 130 in the HMI 10 reads the procedure file designated by a user by referring to the procedure table 310. The operation start unit 130 then causes the device 40 to perform the processing assigned to each of the one or more user operations recorded in the read procedure file by following the procedure recorded in the read procedure file.

While the operation start unit 130 is currently instructing the device 40 to perform the processing assigned to each user operation recorded in the procedure file, the display control unit 140 controls the display 220 to display a message indicating that the device 40 is currently performing the processing designated by the operation start unit 130. For example, while the operation start unit 130 is currently instructing the device 40 to perform the processing assigned to each user operation recorded in the procedure file containing information indicating the three user operations of pressing the button B1, pressing the button B2, and pressing the button B3, together with information about the procedure indicating that pressing the button B1 is followed by pressing the button B2, and pressing the button B2 is followed by pressing the button B3, the display control unit 140 controls the display 220 to display the information described below.

### Displaying Wait Time

More specifically, the display control unit 140 controls the display 220 to display the remaining time from the current time to the scheduled time taken by the device 40 to complete the processing assigned to each user operation recorded in the procedure file by, for example, displaying the character string "Waiting. XX seconds before complete." More specifically, when the device 40 is expected to take two more seconds to complete the processing assigned to the current operation of pressing the button B1 and is expected to take five seconds to complete the processing assigned to the subsequent user operation of pressing the button B2 and to take three seconds to complete the processing assigned to the subsequent user operation of pressing the button B3, the display control unit 140 controls the display 220 to display the character string "Waiting. 10 seconds before complete." Immediately after the device 40 has completed the processing assigned to the user operation of pressing the button B1, the display control unit 140 controls the display 220 to display the character string "Waiting. 8 seconds before complete."

The HMI 10 may obtain, from at least one of the PLC 20, the slave unit 30, and the device 40, information about the remaining time from the current time to the scheduled time taken by the device 40 to complete the processing assigned to each user operation recorded in the procedure file, or information about the state of the device 40 performing the processing assigned to each user operation recorded in the procedure file and the expected time taken by the device 40 to complete such processing.

### Displaying "Processing Being Performed"

When the device 40 is currently performing the processing assigned to each user operation recorded in the procedure file, the display control unit 140 may control the display 220 to display a character string indicating that the device 40 is waiting (or currently performing processing). The display control unit 140 may display, for example, the character string "Automatic operation being performed" on the display 220.

When the device 40 is currently performing the processing assigned to each user operation recorded in the procedure file, the display control unit 140 controls the display 220 to display the wait time (remaining time before completing the processing) and/or the character string "Processing being performed." This allows the user to determine that the device 40 is currently performing the processing assigned to each user operation recorded in the procedure file. For example, the HMI 10 can prevent, for example, the user from unintentionally inputting a user operation instructing the device 40 to perform other processing on the HMI 10 while the device 40 is currently performing processing assigned to one user operation.

### HMI Recording User Operations

As described above, the operation recording unit 120 may also obtain, from the input reception unit 110, the operation time (occurrence time) at which the touch panel 200 has received a user operation, and may additionally store the operation time of the user operation into the procedure file. More specifically, the operation recording unit 120 may further store the time interval between two user operations included in the series of operations recorded by the operation recording unit 120.

The operation recording unit 120 with the above structure further stores the time interval between two user operations included in the series of operations recorded by the operation recording unit 120. In other words, the operation recording unit 120 further records the time interval between two user operations into the procedure file recording the details of one or more user operations and their procedure.

The HMI 10 recording a series of operations performed on the device 40 together with their procedure can further store the time interval between two user operations included in the recorded series of operations. For example, the user operations performed on the device 40 may include operations to be performed only at specific times, such as while the device 40 is performing a specific operation. The HMI 10 can store the timing appropriate for such user operations included in the series of operations performed on the device 40.

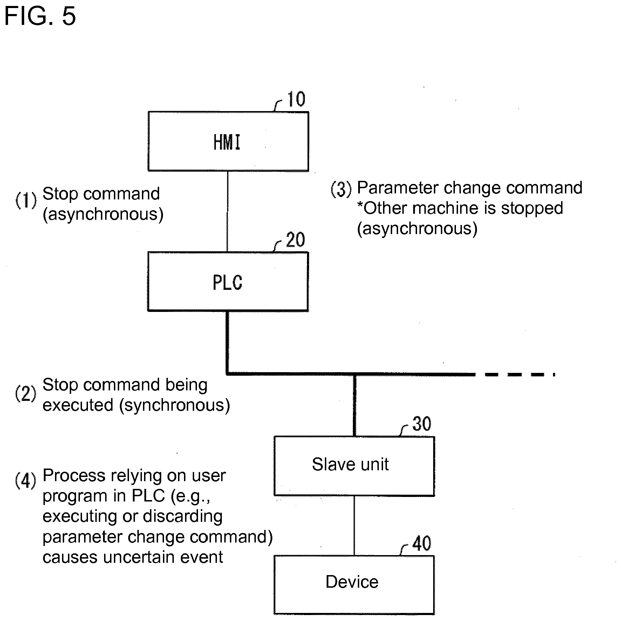

The user operations to be recorded in the procedure file by the operation recording unit 120 together with the operation times and the user operations that have less need to record together with the operation times will now be described with reference to Figs. 5 to 7.

### User Operation to be Recorded with Operation Time

Fig. 5 is a diagram describing user operations to be recorded by the HMI 10 together with their operation times.

As shown in Fig. 5, the HMI 10 usually does not operate solely in the manufacturing line, and operates together with various other machines, such as the PLC 20, the slave unit 30, and the device 40. The HMI 10 reads information from various other machines, such as the PLC 20, the slave unit 30, and the device 40, or writes data used in various operations of such other machines.

When the HMI 10 asynchronously provides a control command A, such as a stop command, to a machine (specifically, at least one of the PLC 20, the slave unit 30, the device 40, and others), the operation can involve an event described below. The control command A asynchronously provided by the HMI 10 to the machine is not synchronized with the displaying operation of, for example, the results of the asynchronously provided control command A on the display 220 performed by the HMI 10 (the display control unit 140). A user viewing the display 220 of the HMI 10 may assume that the HMI 10, which has asynchronously provided the control command A to the machine, is currently ready to receive a subsequent operation immediately after the control command A has been provided to the machine.

However, when the HMI 10 transmits a new control command B to the above machine while this machine is currently executing the previous control command A, the result from the new control command B can depend on the user program operation of the machine, and may not match the expected result.

For example, (1) the HMI 10 asynchronously provides a stop command to the PLC 20. (2) While the PLC 20 is currently executing the stop command (performing the processing synchronously) on the slave unit 30 (and the device 40), (3) the HMI 10 asynchronously provides a parameter change command to the PLC 20 although the machine (PLC 20) is being stopped. This operation can involve an event described below. (4) The PLC 20 performs processing that relies on the user program in the PLC 20 in response to the parameter change command, such as the processing for executing the parameter change command or discarding the parameter change command. The control system 1 can thus involve an uncertain event. In this case, the HMI 10 needs to record the user operations (1) and (3) included in the example user operations described in Fig. 5 to reflect the wait time between the user operations (1) and (3) to prevent other machines (specifically, at least one of the PLC 20, the slave unit 30, the device 40, and others) from being affected.

### Other User Operation to be Recorded with Operation Time

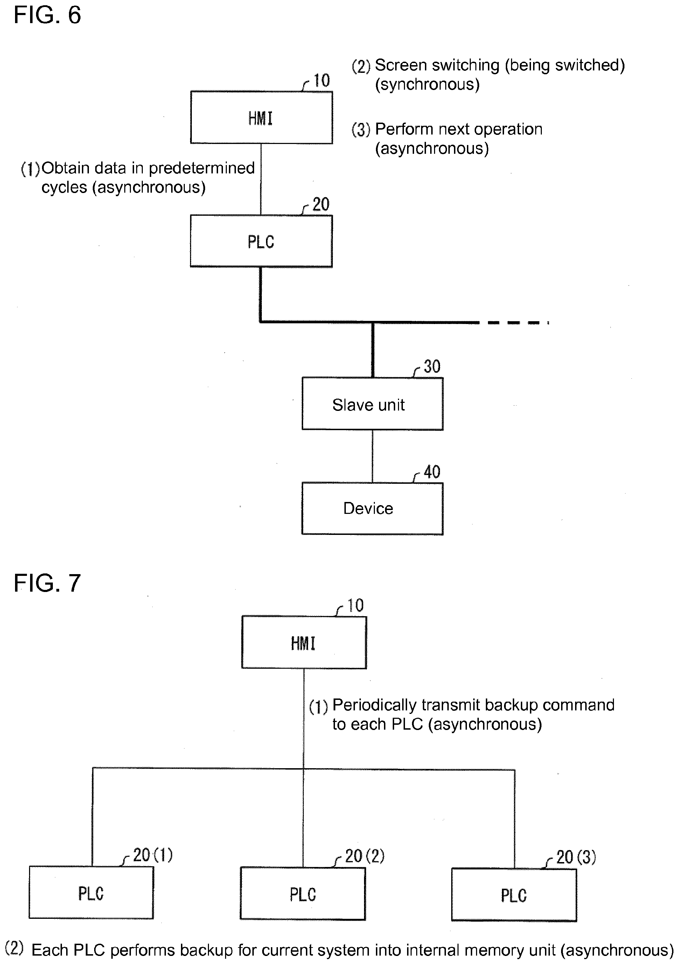

Fig. 6 is a diagram describing another user operation to be recorded by the HMI 10 together with its operation time, different from the user operation shown in Fig. 5.

The HMI 10 (display control unit 140) updates information from the PLC 20 appearing on the display 220, and updates the display details reflecting the latest information from the PLC 20. However, when the volume of information provided from the PLC 20 is too large, the display can be delayed (updating the display can take a long time).

When a user performs another synchronous operation B on the HMI 10, which is for example an operation of switching between screens (synchronous operation), while the display is delayed (updating the display takes a long time), the operation can involve an event described below. The HMI 10 takes a longer time to update the data (update the display details of the display 220) to delay the completion of the other synchronous operation B behind the expected time. When the next asynchronous operation B is performed without the next screen (screen with the display details reflecting the latest information from the PLC 20) being updated, the operation B becomes invalid because the screen is not updated.

For example, (1) the HMI 10 asynchronously performs the operation of obtaining data from the PLC 20 in predetermined cycles. (2) While the HMI 10 (display control unit 140) is currently performing a process (synchronous operation) of switching to the screen reflecting the latest information obtained from the PLC 20, (3) a user performs the next asynchronous operation on the HMI 10. In this case, the HMI 10 does not perform the processing assigned to the next asynchronous operation.

Thus, the HMI 10 also needs to record the example user operation in Fig. 6 to reflect the wait time between the time at which the process (synchronous operation) of switching to the screen reflecting the latest information from the PLC 20 is completed and the time at which the user operation is performed.

### User Operation to be Recorded without Operation Time

Fig. 7 is a diagram describing user operations to be recorded by the HMI 10 without their operation times.

When the HMI 10 transmits backup commands to a plurality of PLCs 20, information indicating whether the PLCs 20 have completed their backup process is to be obtained only when the user intends to obtain backup data directly from the PLCs 20. The HMI 10 can thus transmit backup commands to the PLCs 20 in parallel at any time. This type of user operation, or the user operation of transmitting backup commands to the PLCs 20, can be performed at any operation timing (operation time). The operation recording unit 120 has less need to record this user operation together with the operation time in the procedure file.

For example, a user performs, on the HMI 10, a plurality of user operations for instructing PLCs 20(1), 20(2), and 20(3) to perform a backup process. (1) The HMI 10 transmits backup commands (asynchronous operation) to the PLCs 20(1), 20(2), and 20(3). (2) Each of the PLCs 20(1), 20(2), and 20(3) performs the backup process for the current system (asynchronous operation) and stores the backup data into its internal memory unit.

The operation recording unit 120 may not record, into the procedure file, the operation times of the user operations for instructing the PLCs 20(1), 20(2), and 20(3) to perform a backup process.

### Example

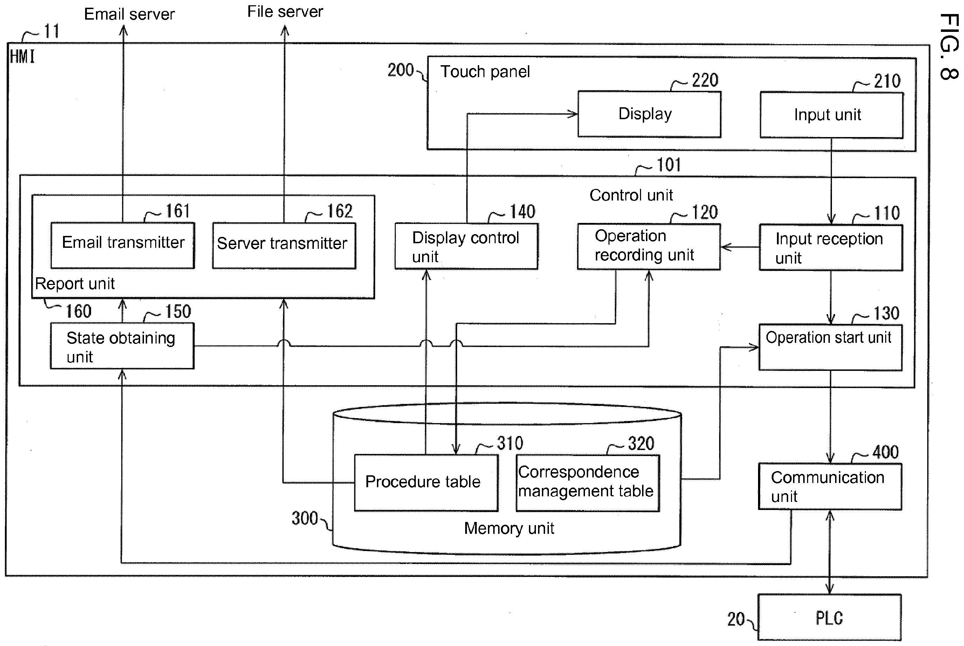

An example will now be described with reference to Figs. 8 to 18. For ease of explanation, the components with the same functions as those described in the above embodiment are given the same reference numerals, and will not be described.

### HMI

Fig. 8 is a block diagram showing the main components of an HMI 11 The HMI 11 shown in Fig. 8 includes a control unit 101, which includes a state obtaining unit 150 and a report unit 160, in addition to the functional blocks included in the control unit 100 in the HMI 10 shown in Fig. 1. The HMI 11 has the same structure as the HMI 10, except the state obtaining unit 150 and the report unit 160.

The state obtaining unit 150 obtains information (state information) about the state of at least one of the PLC 20, the slave unit 30, and the device 40 from the communication unit 400. The state obtaining unit 150 provides the obtained state information to the report unit 160 and the operation recording unit 120. When, for example, obtaining state information reporting a problem in at least one of the PLC 20, the slave unit 30, and the device 40 from the communication unit 400, the state obtaining unit 150 provides the obtained state information to the report unit 160 and the operation recording unit 120.

The report unit 160 provides the procedure file stored in the procedure table 310 and/or the state information obtained by the state obtaining unit 150 to external devices or other units based on the state information obtained by the state obtaining unit 150. The report unit 160 includes an email transmitter 161, which instructs transmission of email to an external email server, and a server transmitter 162, which transmits a procedure file to an external file server.

The email transmitter 161 instructs the external email server to transmit email containing the state information obtained from the state obtaining unit 150 to a predetermined addressee. When, for example, a problem has occurred in at least one of the PLC 20, the slave unit 30, and the device 40, the email transmitter 161 instructs the external email server to transmit email reporting the problem to, for example, a vendor or a field application engineer (FAE) associated with the unit having the problem.

The server transmitter 162 stores the procedure file stored in the procedure table 310 into the external file server. When, for example, a problem has occurred in at least one of the PLC 20, the slave unit 30, and the device 40, the server transmitter 162 obtains the procedure file containing any user operations performed immediately before the problem has occurred by referring to the procedure table 310. The server transmitter 162 stores the obtained procedure file into the external file server.

### Processing Performed Against Problem

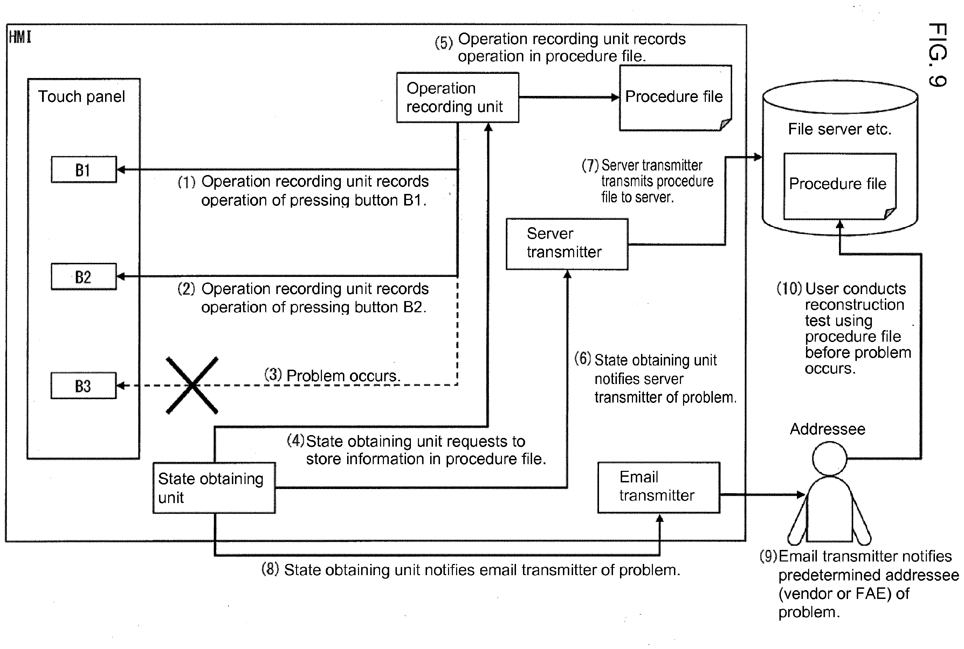

Fig. 9 is a diagram describing processing performed by the HMI 11 when a problem occurs. The operation recording unit 120 in the HMI 11 described with reference to Fig. 9 constantly records, into the procedure file, information indicating user operations received by the touch panel 200 obtained from the input reception unit 110. The operation recording unit 120 may also record information about the operation time for each user operation into the procedure file, in addition to information indicating the user operations and their procedure.
(1) When the input reception unit 110 detects the user operation of pressing the button B1, the operation recording unit 120 records the user operation of pressing the button B1 into the procedure file together with the operation time. (2) When the input reception unit 110 detects the user operation of pressing the button B2, the operation recording unit 120 records the user operation of pressing the button B2 into the procedure file together with the operation time.
(3) After the input reception unit 110 detects the user operation of pressing the button B3, the state obtaining unit 150 obtains, from the communication unit 400, state information reporting a problem in at least one of the PLC 20, the slave unit 30, and the device 40. (4) The state obtaining unit 150, which has obtained the state information reporting a problem in at least one of the PLC 20, the slave unit 30, and the device 40 from the communication unit 400, requests the operation recording unit 120 to store the procedure file.
(5) The operation recording unit 120 records the user operation of pressing the button B3 into the procedure file together with the operation time. The operation recording unit 120 stores, into the procedure table 310, the procedure file containing the user operations of pressing the button B1, pressing the button B2, and pressing the button B3, their procedure, and the operation times of these user operations.
(6) The state obtaining unit 150, which has obtained the state information reporting a problem in at least one of the PLC 20, the slave unit 30, and the device 40, notifies the server transmitter 162 that the problem has occurred. (7) The server transmitter 162, which has received notificaiton of the problem from the state obtaining unit 150, transmits procedure file obtained by referring to the procedure table 310 to the external file server. More specifically, the server transmitter 162 refers to the procedure table 310 and obtains the procedure file containing the user operations of pressing the button B1, pressing the button B2, and pressing the button B3, their procedure, and the operation times of these user operations. The server transmitter 162 transmits obtained procedure file to the external file server, and stores the obtained procedure file into the external file server.
(8) The state obtaining unit 150, which has obtained the state information reporting a problem in at least one of the PLC 20, the slave unit 30, and the device 40, notifies the email transmitter 161 that the problem has occurred. (9) The email transmitter 161, which has received notificaiton of the problem from the state obtaining unit 150, notifies a predetermined addressee that the problem has occurred by email. The predetermined addressee may be a vendor or a FAE associated with the unit having the problem.
(10) The user conducts a reconstruction test using the procedure file in the state before the problem occurs (the procedure file containing the user operations of pressing the button B1, pressing the button B2, and pressing the button B3, their procedure, and the operation times of these user operations). The user (including the vendor and the FAE) may conduct the reconstruction test at the site where the HMI 10 is installed using the procedure file stored in the procedure table 310, or at a place away from the site where the HMI 10 is installed using the procedure file stored in the external file server.

The HMI 11 transfers the procedure file in the state when the problem occurs to the external file server, and notifies the predetermined addressee that the problem has occurred. The user can thus readily conduct the test for reconstructing the situation in which the problem occurred.

### List of Operations

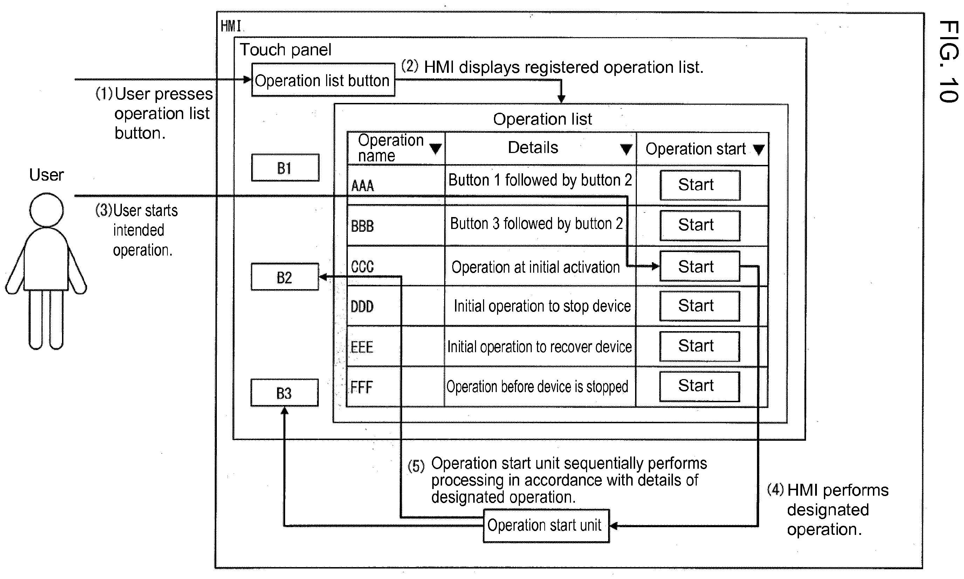

Fig. 10 is a diagram describing the procedure for selecting one of user operations recorded by the HMI 11 and the HMI 11 performing processing assigned to the selected user operation. (1) First, the user presses an operation list button appearing on the touch panel 200 controlled by the display control unit 140.
(2) The HMI 11 detects the user operation of pressing the operation list button, and displays the registered operation list. More specifically, the input reception unit 110, which has detected the user operation of pressing the operation list button appearing on the touch panel 200, instructs the display control unit 140 to perform the process described below. The input reception unit 110 instructs the display control unit 140 to control the display 220 to display the list of one or more procedure files stored in the procedure table 310. The display control unit 140 receives the above instruction from the input reception unit 110, and controls the display 220 to display the list of one or more procedure files stored in the procedure table 310.
(3) The user refers to the list of procedure files (operation list) appearing on the touch panel 200 controlled by the display control unit 140, selects an intended operation (procedure file) from the operation list, and presses a start button for the selected operation.
(4) The HMI 11 detects the user operation of pressing the start button, and performs the designated operation. More specifically, the input reception unit 110, which has detected the user operation of pressing the start button appearing on the touch panel 200, instructs the operation start unit 130 to perform the process described below. The input reception unit 110 instructs the operation start unit 130 to cause the device 40 to perform the processing assigned to each user operation included in the operation (procedure file) for which the start button has been pressed, by following the procedure for the operation (procedure file) for which the start button has been pressed.
(5) The operation start unit 130 performs the processing assigned to each user operation included in the designated operation in accordance with the details of the designated operation in the designated order (procedure) of the operation. More specifically, the operation start unit 130 first reads the procedure file for the operation for which the start button has been pressed by referring to the procedure table 310. The operation start unit 130 performs the processing assigned to each user operation contained in the read procedure file by following the procedure designated in the read procedure file. When, for example, the procedure file for the operation of pressing the start button contains information indicating the two user operations of pressing the button B2 and pressing the button B3, together with information about the procedure indicating that pressing the button B2 is followed by pressing the button B3, the operation start unit 130 performs the process described below.

The operation start unit 130 first determines that the user operation of pressing the button B2 is performed in the read procedure file, and then performs the user operation of pressing the button B2. More specifically, the operation start unit 130 obtains a control signal (a control signal for causing the device 40 to perform the processing assigned to the user operation of pressing the button B2) associated with the user operation of pressing the button B2 by referring to the correspondence management table 320. The operation start unit 130 provides the obtained control signal to the communication unit 400, and causes the device 40 to perform the processing assigned to the user operation of pressing the button B2 through the PLC 20 and the slave unit 30.

Subsequently, the operation start unit 130 determines that the user operation of pressing the button B2 is followed by the user operation of pressing the button B3 in the read procedure file, and then performs the user operation of pressing the button B3. More specifically, the operation start unit 130 obtains a control signal associated with the user operation of pressing the button B3 by referring to the correspondence management table 320. The operation start unit 130 provides the obtained control signal to the communication unit 400, and causes the device 40 to perform the processing assigned to the user operation of pressing the button B3 through the PLC 20 and the slave unit 30.

### Starting Operation Guidance

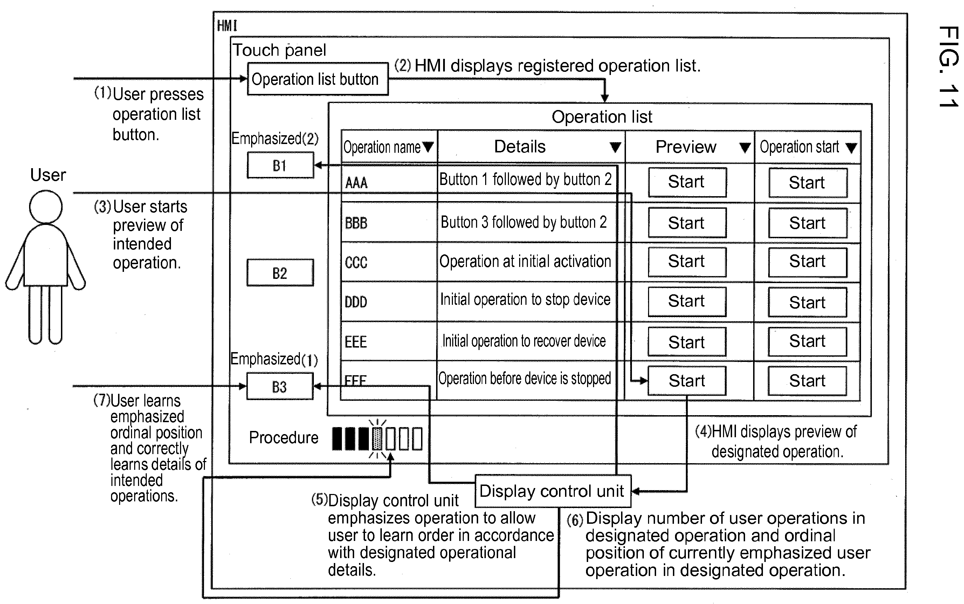

Fig. 11 is a diagram describing the procedure for selecting one of user operations recorded by the HMI 11 and the HMI 11 displaying the selected user operation. First, (1) the user presses the operation list button appearing on the touch panel 200 controlled by the display control unit 140.
(2) The HMI 11 detects the user operation of pressing the operation list button, and displays the registered operation list. More specifically, the input reception unit 110, which has detected the user operation of pressing the operation list button appearing on the touch panel 200, instructs the display control unit 140 to perform the process described below. The input reception unit 110 instructs the display control unit 140 to control the display 220 to display the list of one or more procedure files stored in the procedure table 310.
(3) The user refers to the list of procedure files (operation list) appearing on the touch panel 200 controlled by the display control unit 140, selects an intended operation (procedure file) from the operation list, and presses the start button for displaying a preview of the selected operation. To simplify explanation below, the start button for the preview operation may be shortened to the preview button.
(4) The HMI 11 detects the user operation of pressing the preview button, and displays a preview of the designated operation. More specifically, the input reception unit 110, which has detected the user operation of pressing the preview button appearing on the touch panel 200, instructs the display control unit 140 to perform the process described below. The input reception unit 110 instructs the display control unit 140 to control the display 220 to display information indicating the user operation included in the operation (procedure file) of pressing the preview button by following the procedure for the operation (procedure file) for which the preview button has been pressed.
(5) The display control unit 140 emphasizes the user operation to allow the user to learn the order in which the user operation is performed in accordance with the designated operational details. More specifically, the display control unit 140 controls the display 220 to emphasize each user operation contained in the procedure file in accordance with the details of the designated operation, or in accordance with the details of the procedure file for the operation for which the preview button has been selected by the user to allow the user to learn the order in which each user operation is performed. More specifically, the display control unit 140 first reads the procedure file for the operation for which the preview button has been pressed by referring to the procedure table 310. The display control unit 140 sequentially emphasizes the information indicating each user operation contained in the read procedure file in the order in which each user operation is performed recorded in the read procedure file. When, for example, the procedure file for the operation for which the preview button has been pressed contains information indicating the two user operations of pressing the button B3 and pressing the button B1, together with information about the procedure indicating that pressing the button B3 is followed by pressing the button B1, the display control unit 140 performs the process described below.
   The display control unit 140 first controls the touch panel 200 (display 220) to emphasize a button B3, or for example cause the button B3 to blink for a predetermined time period. After emphasizing the button B3, the display control unit 140 emphasizes a button B1, or for example causes the button B1 to blink for a predetermined time period.
(6) The display control unit 140 controls the touch panel 200 (display 200) to display the number of user operations to be included in the designated operation, or to be included in the operation for which the preview button has been selected by the user. The display control unit 140 also displays the ordinal position of the currently emphasized user operation in the designated operation. When, for example, the procedure file for the operation for which the preview button has been designated by a user includes seven user operations, and the user operation currently emphasized by the display control unit 140 is the fourth user operation, the display control unit 140 controls the display 220 to display the information described below. As shown in the operational process pointed by arrow (6) in Fig. 11, the display control unit 140 displays seven blocks assigned to the seven user operations contained in the procedure file, and causes the fourth block assigned to the currently emphasized fourth user operation to blink.
(7) The user learns the ordinal position of the user operation emphasized by the display control unit 140 in the process (5), and correctly learns the details of the intended operation, or specifically the procedure (order) in which each user operation is to be performed.

As described above with reference to Fig. 11, the HMI 11 includes the display 220, which displays information indicating one or more user operations recorded by the operation recording unit 120 and information indicating their procedure. The display 220 with the above structure displays information indicating one or more user operations on the device 40 recorded by the operation recording unit 120 together with information indicating their procedure. Thus, the HMI 11 records a series of operations to be performed on the device 40 together with their procedure. The HMI 11 can display the recorded information indicating the one or more user operations together with the recorded information indicating the procedure.

### Displaying Operation History

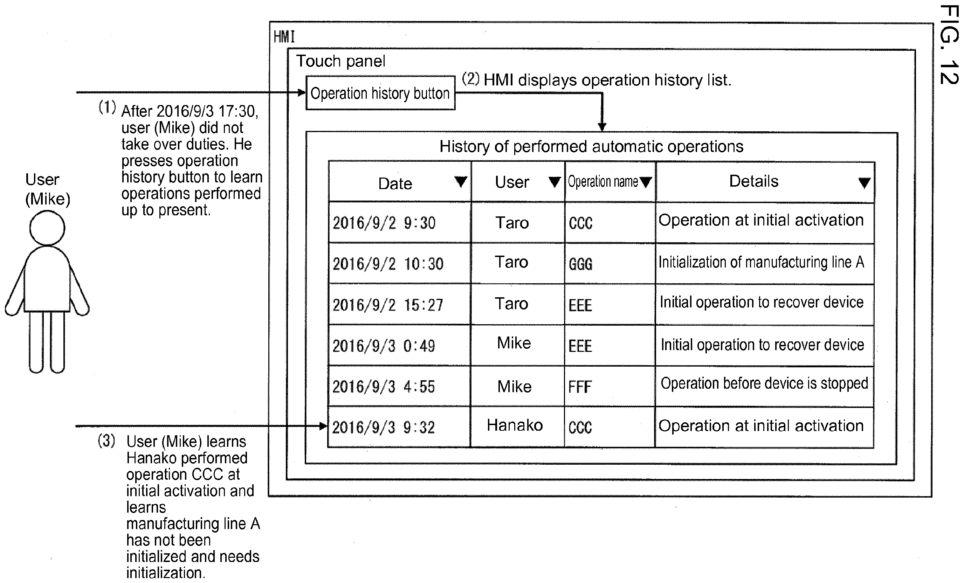

Fig. 12 is a diagram describing the HMI 11 displaying the recorded user operations in time sequence together with the corresponding operator names. The control system described with reference to Fig. 12 operates under the five conditions described below. (I) A device X having its operation controlled by the HMI 11 is to perform the processing assigned to a user operation CCC when activated. (II) To properly operate a manufacturing line A controlled by the HMI 11, the processing assigned to a user operation GGG is to be performed after the device X is activated. (III) To recover the device X from an unexpected problem, the processing assigned to a user operation EEE is to be performed. (IV) The user needs to stop the device X at 5:00 (5:00 a.m.). (V) Before the device X is stopped, the processing assigned to an operation FFF is to be performed. In the control system described with reference to Fig. 12, (VI) the users Taro and Hanako are on a day shift, and the user Mike is on a night shift.

As shown in Fig. 12, (1) after 17:30 (5:30 p.m.) on September 3, 2016, the user Mike did not take over the duties from the user Taro or the user Hanako. The user Mike presses an operation history button appearing on the touch panel 200 controlled by the display control unit 140 to learn operations performed by the user Taro or the user Hanako up to the present.
(2) The HMI 11 detects the user operation of pressing the operation history button, and displays the operation history list. More specifically, the input reception unit 110, which has detected the user operation of pressing the operation history button appearing on the touch panel 200, instructs the display control unit 140 to perform the process described below. The input reception unit 110 instructs the display control unit 140 to control the display 220 to display the list of information indicating the user operations performed up to the present (the procedure file containing the user operations) stored in the procedure table 310 together with the operator names of these user operations in time sequence. The display control unit 140, which has received the instruction from the input reception unit 110, controls the display 220 to display the list of information indicating the user operations performed up to the present stored in the procedure table 310 together with the operator names of these user operations in time sequence.
(3) The user Mike learns that the user Hanako performed the user operation CCC at the initial activation at 9:32 (9:32 a.m.) on September 3, 2016. The user Mike also learns that the manufacturing line A has not been initialized (specifically, a user operation GGG) after the user Hanako performed the user operation CCC at 9:32.

As described above, (II) to properly operate the manufacturing line A controlled by the HMI 11, the processing assigned to the user operation GGG is to be performed after the device X is activated. Thus, the user Mike learns that the manufacturing line A is to be initialized (a user operation GGG).

### Sorting Function and Filtering Function

The display control unit 140 controls the display 220 to display the information described below to enable the sorting function and the filtering function in the operation history list shown in Fig. 12.

### Sorting Function

When the input reception unit 110 detects the user operation of clicking a title (item) in the table storing the operation history list shown in Fig. 12, the display control unit 140 controls the display 220 to display information contained in the table in ascending or descending order. The title (item) in the table refers to an item such as a date, a user, an operation name, or details included in the table storing the operation history list appearing on the display 220 controlled by the display control unit 140.

The display control unit 140 may change the method for sorting in the ascending and descending order in accordance with the values (details) under the title (item) designated by the user in the operation history list. When, for example, the values under the item designated by a user are numerical values, the display control unit 140 sorts these values in the order of larger or smaller values. When the values are alphabetic characters, the display control unit 140 sorts these values in the order from A to Z or from Z to A. The display control unit 140 then controls the display 220 to display the sorted values.

Instead of sorting the values included only in the designated column (title or item) independently from other information, the display control unit 140 sorts the values in the other columns in the same row while grouping the values in the same row, and then controls the display 220 to display the sorted values.

The user may use this sorting function to sort the information contained in the operation history list in the order of, for example, the operators (users), and thus can check the user operations for each user.

### Filtering Function

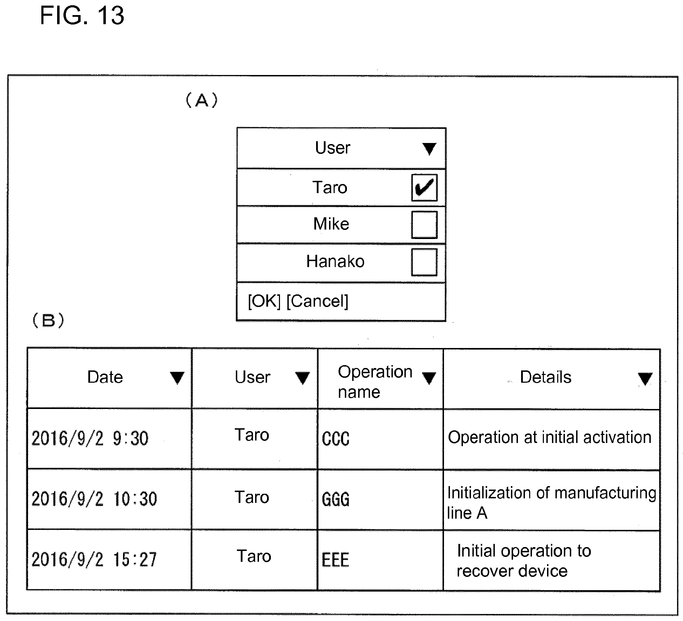

When the input reception unit 110 detects the user operation of clicking a predetermined mark displayed next to the title (item) in the table in the operation history list shown in Fig. 12, the display control unit 140 controls the display 220 to display the table shown in Fig. 13.

Fig. 13 is a diagram describing an example table showing the operation history list shown in Fig. 12 displayed through filtering. As shown in table (A) in Fig. 13, the display control unit 140 first controls the display 220 to display the list of each item (value or details) in the title designated in the operation history list in Fig. 12. When, for example, the input reception unit 110 detects the user operation of clicking a mark displayed next to the user title in the operation history list shown in Fig. 12, the display control unit 140 controls the display 220 to display the table (A) shown in Fig. 13 in a manner superimposed on the operation history list.

When the input reception unit 110 detects the user operation of check-marking Taro in the table (A) shown in Fig. 13 and pressing [OK], the display control unit 140 controls the display 220 to display the table (B) shown in Fig. 13. More specifically, the display control unit 140 controls the display 220 to display the results extracted from the information included in the operation history list shown in Fig. 12 under the condition designated (check-marked item) in the table (A) in Fig. 13.

In the example shown in the table (A) in Fig. 13, only Taro is check-marked. The user may check-mark multiple items. For example, the user may check-mark Taro and Hanako, and may press [OK]. More specifically, the user may check-mark or may not check-mark any value in the table (A) shown in Fig. 13. The display control unit 140 controls the display 220 to display the rows (table (B) in Fig. 13) in the operation history list in Fig. 12 corresponding to the check-marked values in the table (A) in Fig. 13.

When, for example, the input reception unit 110 detects the user operation of check-marking Taro and Hanako in the table (A) in Fig. 13, the display control unit 140 controls the display 220 to display only data indicating the users Taro and Hanako included in the information shown in the operation history list in Fig. 12.

This filtering function allows the user to extract information as appropriate from, for example, the operation history of several days and to check the information easily. For example, the user Mike on a night shift can easily extract and learn the operation history of the users Taro and Hanako who were on a day shift.

The use of the sorting function and the filtering function of the display control unit 140 described above with reference to Fig. 13 is not limited to the table storing the operation history list. The display control unit 140 can also use the sorting function and the filtering function for the operation list shown in Figs. 10, 11, and 14 to 18.

### Operation Guidance Display and Manual Start

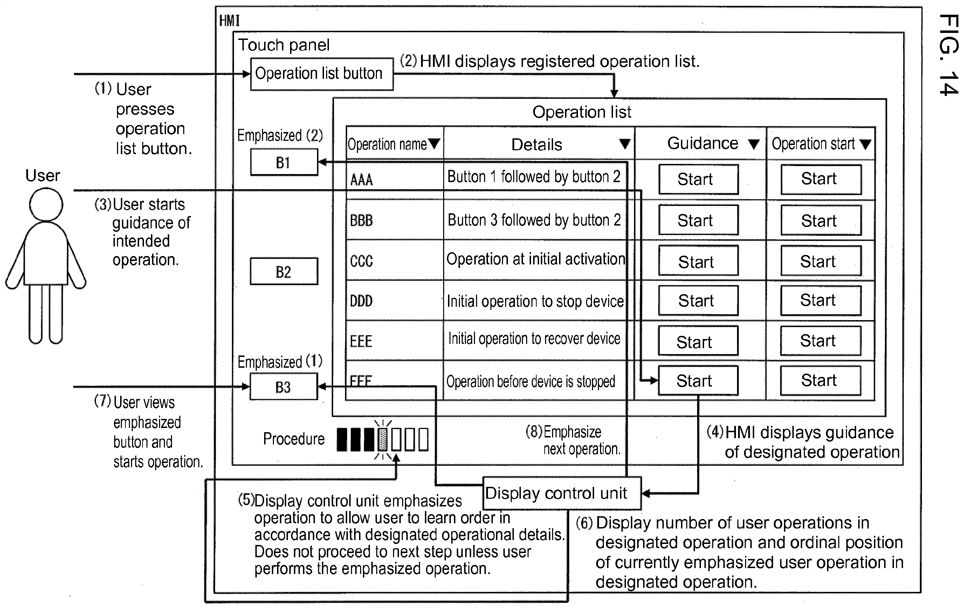

Fig. 14 is a diagram describing the procedure for selecting one of user operations recorded by the HMI 11 and the HMI 11 displaying the guidance for the selected user operation.

As shown in Fig. 14, (1) the user presses the operation list button appearing on the touch panel 200 controlled by the display control unit 140. (2) The HMI 11 detects the user operation of pressing the operation list button, and displays the registered operation list.
(3) The user refers to the list (operation list) of procedure files appearing on the touch panel 200 controlled by the display control unit 140, selects an intended operation (procedure file) from the operation list, and presses the start button for providing a guidance for the selected operation. To simplify explanation in the example described below, the start button for providing the guidance may be shortened to the guidance button.
(4) The HMI 11 detects the user operation of pressing the guidance button, and provides a guidance for the designated operation. More specifically, the input reception unit 110, which has detected the user operation of pressing the guidance button appearing on the touch panel 200, instructs the display control unit 140 to control the display 220 to perform the process described below. The input reception unit 110 instructs the display control unit 140 to control the display 220 to display information indicating each user operation included in the operation (procedure file) for which the guidance button has been pressed by following the procedure for the operation (procedure file) for which the guidance button has been pressed.
(5) The display control unit 140 controls the display 220 to emphasize each user operation in accordance with the details of the designated operation to allow the user to learn the order in which each user operation is performed. More specifically, the display control unit 140 emphasizes each user operation contained in the procedure file in accordance with the details of the designated operation, or in accordance with the details of the procedure file for the operation for which the guidance button has been designated by a user to allow the user to learn the order in which each user operation is performed. The display control unit 140 first reads, by referring to the procedure table 310, the procedure file for the operation for which the guidance button has been pressed. The display control unit 140 sequentially emphasizes the information indicating each user operation contained in the read procedure file in the order in which each user operation is performed recorded in the read procedure file. When, for example, the procedure file for the operation for which the guidance button has been pressed contains information indicating the two user operations of pressing the button B3 and pressing the button B1, together with information about the procedure indicating that pressing the button B3 is followed by pressing the button B1, the display control unit 140 performs the process described below.
   The display control unit 140 first controls the touch panel 200 (display 220) to emphasize the button B3, and for example causes the button B3 to blink for a predetermined time period on the display 220. The HMI 11 does not proceed to the next process unless the user performs the emphasized user operation. When, for example, the user performs the user operation of pressing a button other than the button B3 although the display control unit 140 is emphasizing the button B3, the input reception unit 110 does not receive the user operation of pressing the button other than the button B3. In addition, when the user performs the user operation of pressing a button other than the button B3 while the display control unit 140 is emphasizing the button B3, the display control unit 140 continues to emphasize the button B3 on the display 220 without emphasizing the button B1.
(6) The HMI 11 displays the number of user operations included in the designated operation and the ordinal position of the currently emphasized user operation in the designated operation. More specifically, the display control unit 140 controls the display 220 to display the number of user operations included in the operation for which the guidance button has been designated by a user. The display control unit 140 also controls the display 220 to display the ordinal position of the currently emphasized user operation in the designated operation. When, for example, the procedure file for the operation for which the guidance button has been selected by the user includes seven user operations, and the user operation currently emphasized by the display control unit 140 is the fourth user operation, the display control unit 140 controls the display 220 to display the information described below. As shown in the operational process pointed by arrow (6) in Fig. 14, the display control unit 140 controls the display 220 to display seven blocks assigned to the seven user operations contained in the procedure file, and causes the fourth block assigned to the currently emphasized fourth user operation to blink.
(7) The user views the emphasized button, and performs the processing. More specifically, the user presses the button B3 appearing on the display 220 controlled by the display control unit 140.
(8) The display control unit 140 receives notification of the user operation of pressing the button B3 from the input reception unit 110, and controls the display 220 to emphasize the next operation. More specifically, when the display control unit 140 learns that pressing the button B3 is followed by pressing the button B1 in the procedure file for the operation for which the guidance button has been selected by the user, the display control unit 140 controls the display 220 to emphasize the button B1.

The operation start unit 130 receives notification of the user operation of pressing the button B3 from the input reception unit 110, and obtains a control signal associated with the user operation of pressing the button B3 by referring to the correspondence management table 320. The operation start unit 130 provides the obtained control signal to the communication unit 400, and causes the device 40 to perform the processing assigned to the user operation of pressing the button B3 through the PLC 20 and the slave unit 30.

The HMI 11 described above with reference to Fig. 14 will now be summarized. When one user operation (e.g., the operation of pressing the button B3) in the procedure file (the series of operations recorded by the operation recording unit 120) is performed for the operation for which the guidance button has been designated, the display 220 emphasizes information (specifically, the button B1) indicating the next user operation (specifically, the operation of pressing the button B1) following the first user operation in the procedure file. When one user operation included in the series of operations recorded by the operation recording unit 120 is performed, the display 220 with the above structure emphasizes the information indicating the next user operation following the first user operation included in the series of operations. Thus, the HMI 11 can record the series of operations to be performed on the device 40 together with their procedure, and emphasize information indicating the next user operation following the first user operation in the recorded series of operations.

More specifically, when one user operation included in the series of operations recorded together with their procedure is performed, the HMI 11 can emphasize information indicating the next user operation to notify the user of the next user operation.

The display 220 also displays information indicating one or more user operations recorded by the operation recording unit 120 together with information about the ordinal position of each user operation in the series of operations recorded by the operation recording unit 120. More specifically, as described in the process (6) in Fig. 11, the display 220 displays the number of user operations included in the operation (an operation name FFF) designated by the user, and the ordinal position of the currently emphasized user operation in the designated operation.

The display 220 with the above structure displays information indicating one or more user operations recorded by the operation recording unit 120 together with information about the ordinal position each of the one or more user operations in the series of operations recorded by the operation recording unit 120.

Thus, the HMI 11 can display information about the total number of user operations included in the series of operations recorded by the operation recording unit 120 together with their procedure. The HMI 11 can also display information about the ordinal position of one user operation in the series of operations.

As shown in the process (8) in Fig. 14, the HMI 11 includes an input reception unit 110 (receiving unit), which receives a processing instruction operation (for example, the user operation of pressing the button B3 that is currently emphasized by the display control unit 140) that instructs the operation start unit 130 to cause the device 40 to perform the processing assigned to each of the one or more user operations recorded by the operation recording unit 120 (user operations recorded in the procedure file) by following the procedure (or specifically the procedure recorded in the procedure file) recorded by the operation recording unit 120. More specifically, for example, the input reception unit 110 receives the user operation of pressing the button B3 that is currently emphasized by the display control unit 140.

When the input reception unit 110 receives the processing instruction operation (for example, the user operation of pressing the button B3), the operation start unit 130 causes the device 40 to perform the processing assigned to each user operation recorded by the operation recording unit 120 by following the procedure recorded by the operation recording unit 120.

When the input reception unit 110 receives the processing instruction operation, the operation start unit 130 with the above structure causes the device 40 to perform the processing assigned to each of the one or more user operations recorded by the operation recording unit 120 (for example, the user operation of pressing the button B3) by following the procedure recorded by the operation recording unit 120.

Thus, the HMI 11 can record a series of operations to be performed on the device 40 together with their procedure, and cause the device 40, in response to the processing instruction operation, to perform the processing assigned to each of the one or more user operations recorded by the operation recording unit 120 by following the procedure recorded by the operation recording unit 120.

### Preventing Wrong Button from Being Pressed: Hiding Unused Button

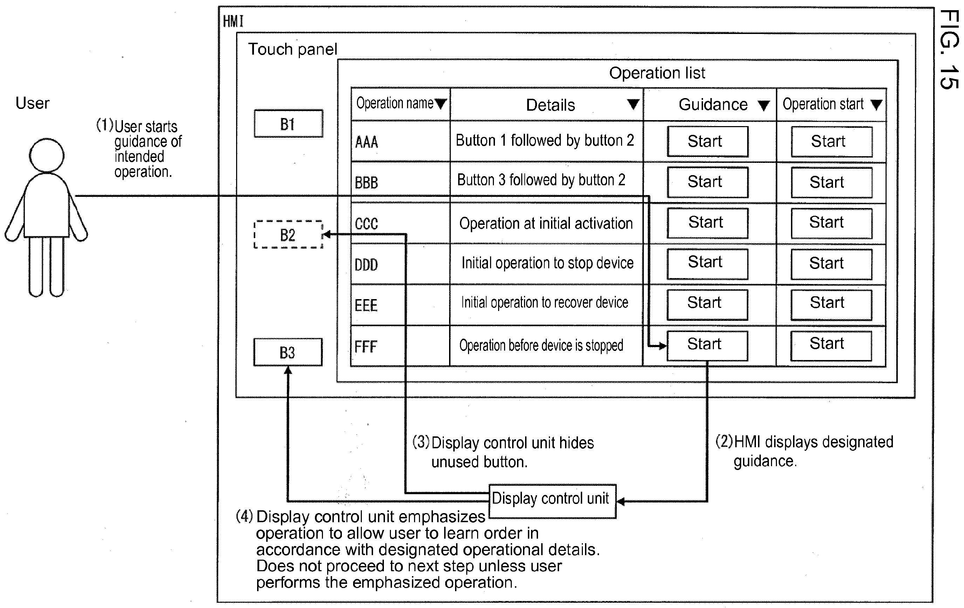

Fig. 15 is a diagram describing an example of processing performed by the HMI 11 to prevent a user from performing an operation different from the displayed details during guidance display.

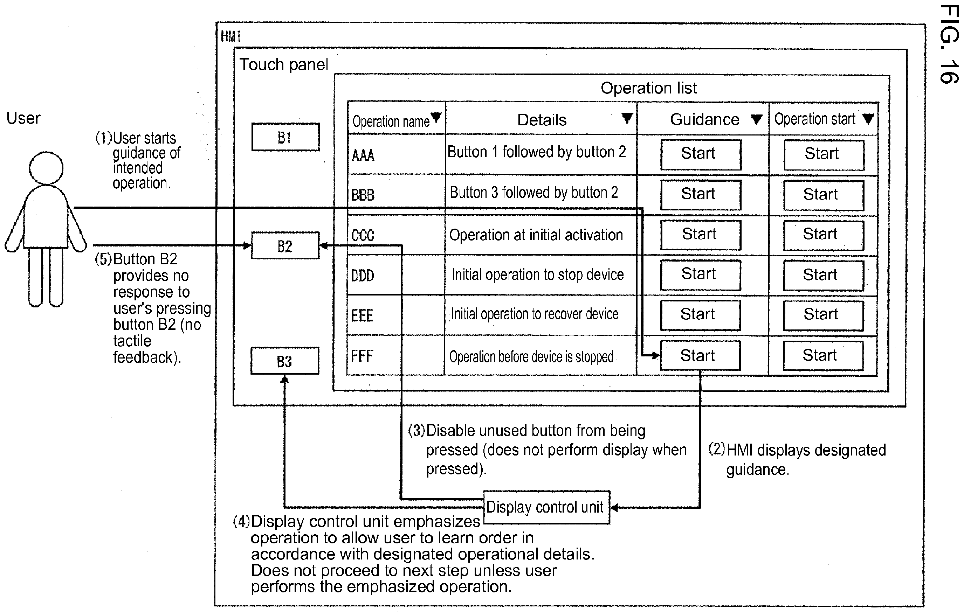

As shown in Fig. 15, (1) the user first presses the guidance button for an intended operation included in the list (operation list) of the procedure file appearing on the touch panel 200 controlled by the display control unit 140. (2) The HMI 11 detects the user operation of pressing the guidance button, and provides a guidance for the designated operation. More specifically, the display control unit 140 controls the display 220 to display information indicating the user operation included in the operation (procedure file) for which the guidance button has been pressed by following the procedure for the operation (procedure file) for which the guidance button has been pressed.
(3) The display control unit 140 hides any unused button (button assigned to any user operation that is not contained in the procedure file for the operation for which the guidance button has been pressed). For example, the display control unit 140 controls the display 220 to hide (not to display) the button B2 when determining that the procedure file for the operation for which the guidance button has been pressed does not contain the user operation of pressing the button B2.
(4) The display control unit 140 controls the display 220 to emphasize the user operations to allow the user to learn the order in which each user operation is performed in accordance with the designated operational details. More specifically, the display control unit 140 controls the display 220 to emphasize each user operation contained in the procedure file in accordance with the details of the designated operation, or in accordance with the details of the procedure file for the operation for which the guidance button has been designated by a user to allow the user to learn the order in which each user operation is performed. The HMI 11 does not proceed to the next process unless the user performs the emphasized user operation. Preventing Wrong Button from being Pressed: Disabling Unused Button from being Pressed
   Fig. 16 is a diagram describing another example of processing performed by the HMI 11 to prevent a user from performing an operation different from the displayed details during guidance display. The processes (1), (2), and (4) shown in Fig. 16 are the same as the processes (1), (2), and (4) shown in Fig. 15, and will not be described repeatedly.
(3) The display control unit 140 disables any unused button (button assigned to any user operation that is not contained in the procedure file for the operation for which the guidance button has been pressed) from being pressed. When the input reception unit 110 receives the operation of pressing of any button (software button), the display control unit 140 typically controls the display 220 to display information in response to the pressed button. When, for example, the input reception unit 110 receives the user operation of pressing the button B3, the display control unit 140 controls the display 220 to display, for example, the pressed button B3 to have its surface being depressed or its color being changed. For any unused button disabled by the display control unit 140 from being pressed, the display control unit 140 causes the display 220 to display no response to the pressed disabled button (e.g., does not display the pressed button with its surface being depressed or its color being changed) in response to the pressed disabled button. When, for example, the display control unit 140 determines that the procedure file for the operation for which the guidance button has been pressed does not include the user operation of pressing the button B2, the display control unit 140 causes the display 220 to display no response to the pressed button B2, although the input reception unit 110 receives the user operation of pressing the button B2.
(5) The button B2 provides no response (no tactile feedback) to the user pressing the button B2 appearing on the touch panel 200. In other words, the display control unit 140 causes the display 220 to display no response to the pressed button B2. The operation start unit 130 causes the device 40 to perform no processing assigned to the user operation of pressing the button B2.

### Preventing Wrong Button from Being Pressed: Nullifying Operation on Unused Button

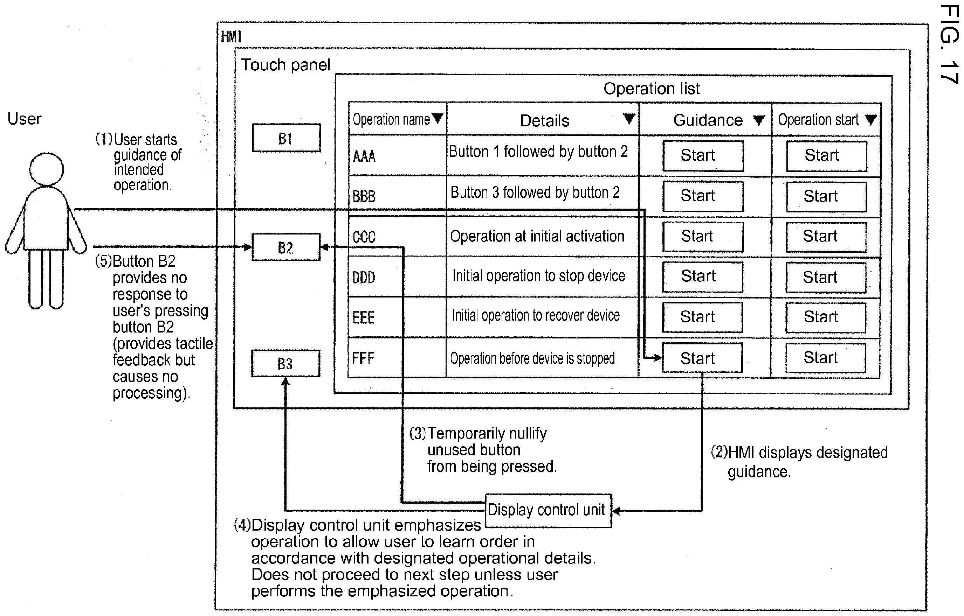

Fig. 17 is a diagram describing another example of processing performed by the HMI 11 to prevent a user from performing an operation different from the displayed details during guidance display. The processes (1), (2), and (4) shown in Fig. 17 are the same as the processes (1), (2), and (4) shown in Fig. 15, and will not be described repeatedly.
(3) The display control unit 140 temporarily nullifies the functions of any unused button. In other words, when any unused button is pressed, the display control unit 140 controls the display 220 to display the pressed button to have its surface being depressed or with its color being changed, but the operation start unit 130 causes the device 40 to perform no processing assigned to the operation of pressing the unused button. When, for example, the display control unit 140 determines that the procedure file for the operation for which the guidance button has been pressed does not contain the user operation of pressing the button B2, the display control unit 140 instructs the operation start unit 130 to cause the device 40 to perform no processing assigned to the user operation of pressing the button B2. The operation start unit 130 receives the above instruction from the display control unit 140, and causes the device 40 to perform no processing assigned to the user operation of pressing the button B2, although the input reception unit 110 receives the operation of pressing the button B2.
(5) Although the user pressed the button B2, the button B2 provides no response (provides tactile feedback but causes no processing). More specifically, the display control unit 140 controls the display 220 to display the button B2 in response to the pressed button, whereas the operation start unit 130 causes the device 40 to perform no processing assigned to the user operation of pressing the button B2.

### Preventing Wrong Button from Being Pressed: Displaying Pop-up Alert

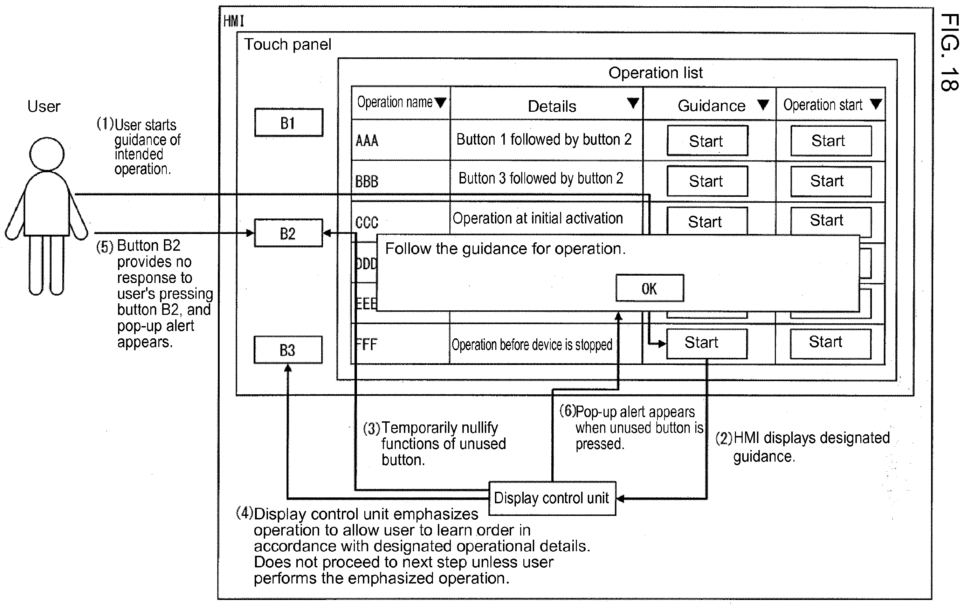

Fig. 18 is a diagram describing another example of processing performed by the HMI 11 to prevent a user from performing an operation different from the displayed details during guidance display. The processes (1) to (4) shown in Fig. 18 are the same as the processes (1) to (4) shown in Fig. 17, and will not be described repeatedly.
(5) Although the user presses the button B2, the button B2 provides no response, and causes a pop-up alert to appear for prompting the user to press a button in accordance with the guidance. When, for example, the display control unit 140 determines that the procedure file for the operation for which the guidance button has been pressed does not contain the user operation of pressing the button B2, the display control unit 140 instructs the operation start unit 130 to perform the process described below. The display control unit 140 first instructs the operation start unit 130 to cause the device 40 to perform no processing assigned to the user operation of pressing the button B2. When the input reception unit 110 receives the user operation of pressing the button B2, the display control unit 140 controls the display 220 to display a pop-up alert for prompting the user to perform the operation of pressing a button in accordance with the guidance.
(6) In response to the user operation of pressing any unused button, the HMI 11 displays a corresponding guidance. When, for example, the input reception unit 110 receives the user operation of pressing the button B2, the display control unit 140 controls the display 220 to display a pop-up alert stating "Follow the guidance for operation." for prompting the user to perform the operation of pressing a button in accordance with the guidance.

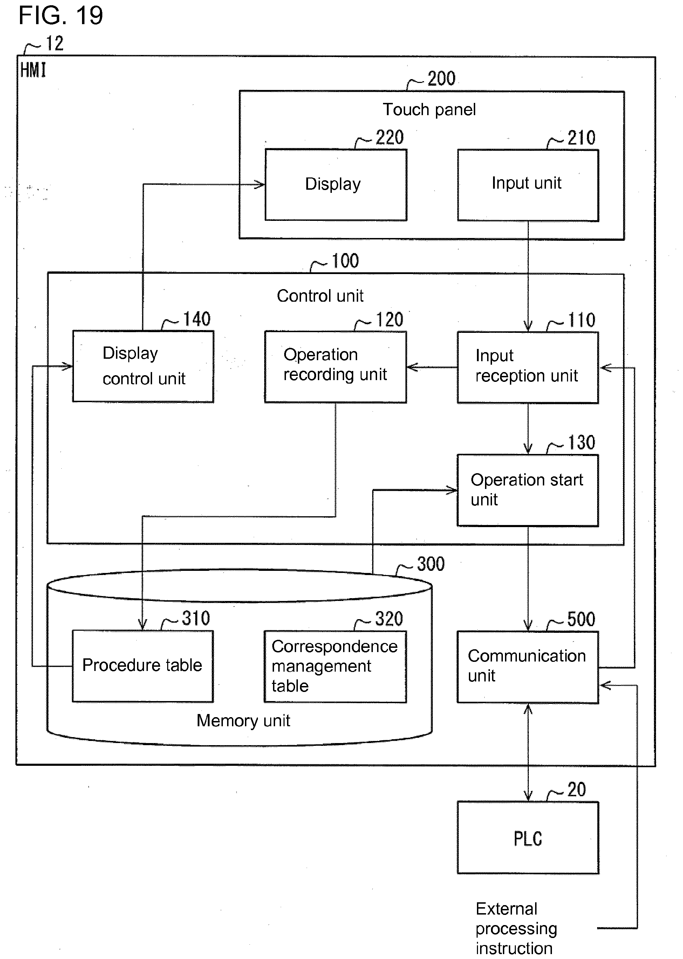

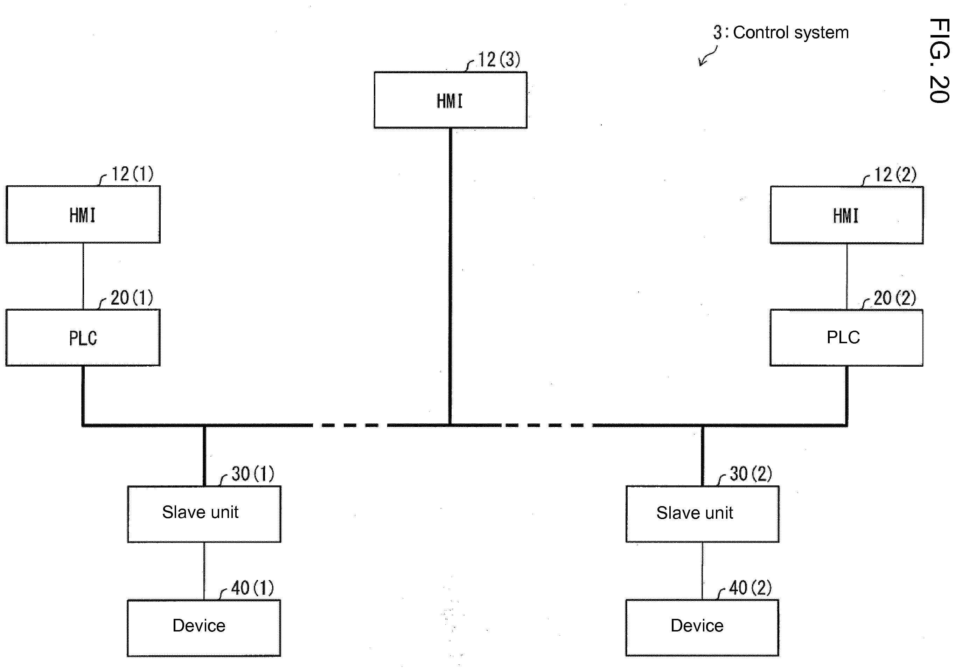

A further embodiment of the present invention will now be described with reference to Figs. 19 and 20. For ease of explanation, components with the same functions as described in the above embodiments are given the same reference numerals, and will not be described. For easy understanding of an HMI 12 (controller) according to an embodiment of the present invention, the overview of a control system 3 including the HMI 12 is described first with reference to Fig. 20.

### Overview of Control System According to a further Embodiment

Fig. 20 is a diagram showing the overview of the control system 3. As shown in Fig. 20, the control system 3 includes a plurality of HMIs 12(1) to 12(3) connected to one another through a network. The HMIs 12(1) to 12(3) may be hereafter simply referred to as HMIs 12 when each of the HMIs (1) to (3) may not be identified. As shown in Fig. 20, the control system 3 includes a plurality of PLCs 20(1), a plurality of PLCs 20(2), a plurality of slave units 30(1), a plurality of slave units 30(2), and a plurality of devices 40(1), and a plurality of devices 40(2). When the functional blocks of each of these HMIs 12(1) to 12(3) are to be identified, they use numerals (1) to (3) added to their reference numbers (signs). For example, a communication unit 500(1) refers to a communication unit 500 included in the HMI 12(1), whereas a communication unit 500(2) refers to a communication unit 500 included in the HMI 12(2).

### HMI

Fig. 19 is a block diagram showing the main components of the HMI 12 according to the further embodiment of the present invention. The functional blocks of the HMI 12 shown in Fig. 19 are substantially the same as the functional blocks of the HMI 10 shown in Fig. 1. The communication unit 500 in the HMI 12 differs from the communication unit 400 in the HMI 10 in the manner described below.

The communication unit 400 in the HMI 10 receives information about the state of at least one of the PLC 20, the slave unit 30, and the device 40 from the PLC 20, and transmits a control signal obtained from the operation start unit 130 to the PLC 20, or in other words, communicates with the PLC 20. The communication unit 500 in the HMI 12 communicates with other controllers, in addition to communicating with the PLC 20. A communication unit 500(1) in an HMI 12(1) communicates with, for example, a communication unit 500(2) in an HMI 12(2) and a communication unit 500(3) in an HMI 12(3), which are controllers other than its controller. Similarly, the communication unit 500(3) in the HMI 12(3) communicates with the communication unit 500(1) in the HMI 12(1) and the communication unit 500(2) in the HMI 12(2), which are controllers other than its controller.

The communication unit 500 receives, from other controllers, information indicating the user operation described below received by the other controllers. More specifically, the control system 3 includes the HMIs 12(1) to 12(3), each of which receives, from the other one of the HMIs 12(1) to (3), information indicating the user operation described below received by the other one of the HMIs 12(1) to (3) in the manner described below.

For example, an input reception unit 110(2) in the HMI 12(2) receives a processing instruction operation for instructing the device 40(1) to perform the processing assigned to each of the one or more user operations recorded in a procedure file A by the operation recording unit 120(1) in the HMI 12(1) by following the procedure recorded in the procedure file A by the operation recording unit 120(1).

The input reception unit 110(2) receives the processing instruction operation, and instructs the communication unit 500(2) to transmit a signal assigned to the received performance instruction operation to the HMI 12(1). The communication unit 500(2) in the HMI 12(2) transmits a signal assigned to the processing instruction operation received by the input reception unit 110(2) to the HMI 12(1).

The communication unit 500(1) in the HMI 12(1) receives the signal assigned to the processing instruction operation received by the input reception unit 110(2) from the HMI 12(2). More specifically, the communication unit 500(1) in the HMI 12(1) receives, from the HMI 12(2), the signal assigned to the processing instruction operation for instructing the device 40(1) to perform the processing assigned to each of the one or more user operations recorded in a procedure file A by the operation recording unit 120(1) in the HMI 12(1) by following the procedure recorded in the procedure file A by the operation recording unit 120(1).

The communication unit 500(1) outputs a signal assigned to the received performance instruction operation to the input reception unit 110(1). The input reception unit 110(1) receives the signal assigned to the processing instruction operation from the communication unit 500(1), and instructs the operation start unit 130(1) to cause the device 40(1) to perform the processing assigned to each of the one or more user operations recorded in a procedure file A by following the procedure recorded in the procedure file A. The operation start unit 130(1) causes the device 40(1) to perform the processing assigned to each of the one or more user operations recorded in the procedure file A by following the procedure recorded in the procedure file A.

More specifically, the input reception unit 110 receives the processing instruction operation from a controller other than its controller. For example, the input reception unit 110(1) in the HMI 12(1) receives, from the HMI 12(2), the user operation described below (a signal assigned to the user operation described below) received by the input reception unit 110(2) in the HMI 12(2). More specifically, the input reception unit 110(1) receives a signal associated with the processing instruction operation, which is received by the HMI 12(2), for instructing the device 40(1) to perform the processing assigned to each of the one or more user operations recorded in a procedure file A by the operation recording unit 120(1) in the HMI 12(1) by following the procedure recorded in the procedure file A by the operation recording unit 120(1).

The input reception unit 110 with the above structure receives the processing instruction operation from a controller other than its controller. Thus, the HMI 12 can record a series of operations to be performed on the device 40 together with their procedure and can cause the device 40 to perform the processing assigned to each of the one or more user operations recorded by the operation recording unit 120 by following the procedure recorded by the operation recording unit 120 when receiving the processing instruction operation from a controller other than its controller. For example, the HMI 12 can receive the processing instruction operation from a controller other than its controller, which is installed away from the HMI 12, and cause the device 40 to perform the processing assigned to each of the one or more user operations by following the procedure.

### Appendixes

The HMI 12 records the log of user operations, or generates a procedure file that is the log data for user operations. The HMI 12 may store the generated procedure file either in its procedure table 310, or in an external file server as described above for the HMI 11. The HMI 12 reads the procedure file stored in the procedure table 310 and/or an external file server. The HMI 12 then causes the device 40 to perform the processing assigned to each user operation contained in the read procedure file by following the procedure in the read procedure file.

The HMI 12 (e.g., HMI 12(1)) performs the process described below when another controller, which is a controller for one or more other HMIs 12 (e.g., HMI 12(2) and/or HMI 12(3)) receives a user operation for instructing its controller to cause the device 40 to perform the processing assigned to each user operation contained in a procedure file recorded by the HMI 12 (for example, HMI 12(1)) by following the procedure in the procedure file recorded by the HMI 12. More specifically, the HMI 12 (e.g., HMI 12(1)) reads the procedure file stored in its procedure table 310 and/or an external file server. The HMI 12 then causes the device 40 to perform the processing assigned to each user operation contained in the read procedure file by following the procedure in the read procedure file.

### Implementations by Software

The control blocks in the HMIs 10, 11, and 12 (particularly, the input reception unit 110, the operation recording unit 120, the operation start unit 130, the display control unit 140, the state obtaining unit 150, and the report unit 160) may be implemented by logic circuits (hardware) formed in, for example, an integrated circuit (IC chip) or by software using a CPU.

When the control blocks are implemented by software, the HMIs 10, 11, and 12 each include a CPU, which executes instructions in a program as software implementing various functions, computer-readable (or CPU-readable) recording media including a ROM and a storage for storing the program and various data, and a RAM, into which the program is expanded. The computer (or CPU) reads the program from the recording media and executes the program to achieve the aspects of the present invention. Examples of such recording media include a non-transitory tangible medium, such as a tape, a disk, a card, a semiconductor memory, and a programmable logic circuit. The program may be provided to the computer through any transmission medium (e.g., a communication network or broadcast waves) that can carry the program. One aspect of the present invention may be a data signal superimposed on a carrier wave representing the program through electronic transmission.

The technical features disclosed in different embodiments may be combined in other embodiments within the technical scope of the invention.

### REFERENCE SIGNS LIST

- 10, 11, 12: HMI (controller)
- 40: device (manufacturing device or testing device)
- 110: input reception unit (receiving unit)
- 120: operation recording unit (recording unit)
- 130: operation start unit (processing instruction unit)
- 220: display

## Claims

1. A controller (10, 11, 12), comprising:
a recording unit (120) configured to record a series of operations including one or more user operations performed on a manufacturing device (40) or a testing device (40) together with a procedure;
a processing instruction unit (130) configured to cause the manufacturing device (40) or the testing device (40) to perform processing assigned to each of the one or more user operations recorded by the recording unit (120) by following the procedure recorded by the recording unit (120);
a display (220) configured to display information indicating each of the one or more user operations and information indicating the procedure recorded by the recording unit (120); and
a receiving unit (110) configured to receive a processing instruction operation for instructing the processing instruction unit (130) to cause the manufacturing device (40) or the testing device (40) to perform processing assigned to each of the one or more user operations recorded by the recording unit (120) by following the procedure recorded by the recording unit (120),
wherein when the receiving unit (110) receives the processing instruction operation, the processing instruction unit causes the manufacturing device (40) or the testing device (40) to perform processing assigned to each of the one or more user operations by following the procedure recorded by the recording unit (120) and wherein
the receiving unit (110) is configured to receive the processing instruction operation from another controller.

2. The controller according to claim 1, wherein
the recording unit (120) is configured to record, together with a procedure, a series of operations designated by a user.

3. The controller according to claim 1 or 2, wherein
the display (220) is configured to emphasize information indicating a second user operation following the first user operation in the series of operations recorded by the recording unit (120) when a first user operation included in the series of operations recorded by the recording unit (120) is performed.

4. The controller according to any one of claims 1 to 3, wherein
the display (220) is configured to display information about an ordinal position of each of the one or more user operations recorded by the recording unit (120) in the series of operations recorded by the recording unit (120), and information indicating each of the one or more user operations recorded by the recording unit (120).

5. The controller according to any one of claims 1 to 4, wherein
the recording unit (120) is configured to store a time interval between two user operations included in the series of operations recorded by the recording unit (120).

6. A control method for a controller (10, 11, 12), the method comprising:
recording by a recording unit (120) a series of operations including one or more user operations performed on a manufacturing device (40) or a testing device (40) together with a procedure;
receiving by a receiving unit (110) from another controller (10, 11, 12) a processing instruction operation for instructing a processing instruction unit (130) to cause the manufacturing device (40) or the testing device (40) to perform processing assigned to each of the one or more user operations recorded by the recording unit by following the procedure recorded by the recording unit;
displaying by a display (220) information indicating each of the one or more user operations and information indicating the procedure recorded in the recording step; and
when the receiving unit receives the processing instruction operation, the processing instruction unit causes the manufacturing device (40) or the testing device (40) to perform processing assigned to each of the one or more user operations recorded in the recording step by following the procedure recorded in the recording step.

7. An information processing program enabling a computer to function as the controller (10, 11, 12) according to any one of claims 1 to 5, the program enabling the computer to function as the units of the controller (10, 11, 12).

## Patentansprüche

1. Steuerungsvorrichtung (10, 11, 12), mit:
einer Aufzeichnungseinheit (120) zum Aufzeichnen einer Serie von Bedienvorgängen umfassend einen oder mehrere Benutzerbedienvorgänge, die an einem Produktionsgerät (40) oder an einem Testgerät (40), zusammen mit einem Ablauf vorgenommen werden;
einer Verarbeitungsanweisungs-Einheit (130), welche dazu eingerichtet ist, das Produktionsgerät (40) oder das Testgerät (40) anzusteuern, so dass dieses Verarbeitungsschritte, die einem jeweiligen Benutzerbedienvorgang der Benutzerbedienvorgänge, die die Aufzeichnungseinheit (120) aufgezeichnet hat, zugeordnet sind, ausführt, indem es den von der Aufzeichnungseinheit (120) aufgezeichneten Ablauf abarbeitet;
einer Anzeigeeinheit (220) zum Anzeigen von Informationen, die jeden der Benutzerbedienvorgänge darstellen, und zum Anzeigen von Informationen, die den von der Aufzeichnungseinheit (120) aufgezeichneten Ablauf darstellen;
eine Empfangseinheit (110) zum Empfangen einer Verarbeitungsanweisungsoperation, um die Verarbeitungsanweisungs-Einheit (130) anzuweisen, das Produktionsgerät (40) oder das Testgerät (40) anzusteuern, so dass dieses Verarbeitungsschritte, die einem jeweiligen Benutzerbedienvorgang der Benutzerbedienvorgänge, die die Aufzeichnungseinheit (120) aufgezeichnet hat, zugeordnet sind, ausführt, indem es den von der Aufzeichnungseinheit (120) aufgezeichneten Ablauf abarbeitet;
wobei die Verarbeitungsanweisungs-Einheit (130) das Produktionsgerät (40) oder das Testgerät (40) ansteuert, so dass dieses Verarbeitungsschritte, die einem jeweiligen Benutzerbedienvorgang der Benutzerbedienvorgänge, die die Aufzeichnungseinheit (120) aufgezeichnet hat, zugeordnet sind, ausführt, indem es den von der Aufzeichnungseinheit (120) aufgezeichneten Ablauf abarbeitet, wenn die Empfangseinheit (110) die Verarbeitungsanweisungsoperation empfängt, und wobei
die Empfangseinheit (110) zum Empfangen der Verarbeitungsanweisungsoperation von einer anderen Steuerungsvorrichtung eingerichtet ist.

2. Steuerungsvorrichtung gemäß Anspruch 1, wobei
die Aufzeichnungseinheit (120) dazu eingerichtet ist, eine Serie von durch einen Benutzer ausgewiesenen Bedienvorgängen zusammen mit einem Ablauf aufzuzeichnen.

3. Steuerungsvorrichtung gemäß Anspruch 1 oder 2, wobei
die Anzeigeeinheit (220) dazu eingerichtet ist, einen zweiten Benutzerbedienvorgang, der auf einen ersten Benutzerbedienvorgang in der von der Aufzeichnungseinheit (120) aufgezeichneten Serie an Bedienvorgängen folgt, hervorzuheben, wenn ein erster Benutzerbedienvorgang, der in der von der Aufzeichnungseinheit (120) aufgezeichneten Serie an Bedienvorgängen enthalten ist, durchgeführt wird.

4. Steuerungsvorrichtung gemäß einem der Ansprüche 1 bis 3, wobei
die Anzeigeeinheit (220) dazu eingerichtet ist, Informationen bezüglich einer Ordnungszahl jedes Benutzerbedienvorgangs der von der Aufzeichnungseinheit (120) aufgezeichneten Benutzerbedienvorgänge in der von der Aufzeichnungseinheit (120) aufgezeichneten Serie an Bedienvorgängen, und Informationen, die jeden Benutzerbedienvorgang der von der Aufzeichnungseinheit (120) aufgezeichneten Benutzerbedienvorgänge angeben, anzuzeigen.

5. Steuerungsvorrichtung gemäß einem der Ansprüche 1 bis 4, wobei
die Aufzeichnungseinheit (120) dazu eingerichtet ist, ein Zeitintervall zwischen zwei Benutzerbedienvorgängen, die in der von der Aufzeichnungseinheit (120) aufgezeichneten Serie an Bedienvorgängen enthalten sind, abzuspeichern.

6. Verfahren zum Betreiben einer Steuerungsvorrichtung (10, 11, 12), umfassend:
Aufzeichnen, durch eine Aufzeichnungseinheit (120), einer Serie von Bedienvorgängen umfassend einen oder mehrere Benutzerbedienvorgänge, die an einem Produktionsgerät (40) oder an einem Testgerät (40) vorgenommen werden, zusammen mit einem Ablauf;
Empfangen, durch eine Empfangseinheit (110), einer Verarbeitungsanweisungsoperation zum Anweisen einer Verarbeitungsanweisungs-Einheit (130), das Produktionsgerät (40) oder das Testgerät (40) so anzusteuern, dass dieses Verarbeitungsschritte, die einem jeweiligen Benutzerbedienvorgang der Benutzerbedienvorgänge, die die Aufzeichnungseinheit (120) aufgezeichnet hat, zugeordnet sind, ausführt, indem es den von der Aufzeichnungseinheit (120) aufgezeichneten Ablauf abarbeitet, wobei die Empfangseinheit (110) die Verarbeitungsanweisungsoperation von einer anderen Steuerungsvorrichtung empfängt;
Anzeigen, durch eine Anzeigeeinheit (220), von Informationen, die jeden Benutzerbedienvorgang der Benutzerbedienvorgänge darstellen, und Informationen, die den in dem Aufzeichnungsschritt aufgezeichneten Ablauf darstellen; und
wobei die Verarbeitungsanweisungseinheit (130) das Produktionsgerät (40) oder das Testgerät (40) derart an steuert, so dass dieses Verarbeitungsschritte, die einem jeweiligen Benutzerbedienvorgang der Benutzerbedienvorgänge, die die Aufzeichnungseinheit (120) aufgezeichnet hat, zugeordnet sind, ausführt, indem es den von der Aufzeichnungseinheit (120) aufgezeichneten Ablauf abarbeitet, wenn die Empfangseinheit (110) die Verarbeitungsanweisungsoperation empfängt.

7. Informationsverarbeitungsprogramm, welches einen Computer dazu veranlasst, die Funktion der Steuerungsvorrichtung (10, 11, 12) gemäß einem der Ansprüche 1 bis 5 auszuführen, wobei das Informationsverarbeitungsprogramm den dazu Computer veranlasst, die Funktion der Einheiten der Steuerungsvorrichtung (10, 11, 12) auszuführen.

## Revendications

1. Dispositif de commande (10, 11, 12) comprenant :
une unité d'enregistrement (120) configurée pour enregistrer une série d'opérations incluant une ou plusieurs opérations utilisateur effectuées sur un dispositif de fabrication (40) ou un dispositif de test (40) conjointement avec une procédure ;
une unité d'instruction de traitement (130) configurée pour amener le dispositif de fabrication (40) ou le dispositif de test (40) à effectuer un traitement attribué à chacune de la ou des opérations utilisateur enregistrées par l'unité d'enregistrement (120) en suivant la procédure enregistrée par l'unité d'enregistrement (120) ;
un affichage (220) configuré pour afficher des informations indiquant chacune de la ou des opérations utilisateur et des informations indiquant la procédure enregistrée par l'unité d'enregistrement (120) ; et
une unité de réception (110) configurée pour recevoir une opération d'instruction de traitement pour charger l'unité d'instruction de traitement (130) d'amener le dispositif de fabrication (40) ou le dispositif de test (40) à effectuer un traitement attribué à chacune de la ou des opérations utilisateur enregistrées par l'unité d'enregistrement (120) en suivant la procédure enregistrée par l'unité d'enregistrement (120),
dans lequel, lorsque l'unité de réception (110) reçoit l'opération d'instruction de traitement, l'unité d'instruction de traitement amène le dispositif de fabrication (40) ou le dispositif de test (40) à effectuer un traitement attribué à chacune de la ou des opérations utilisateur en suivant la procédure enregistrée par l'unité d'enregistrement (120) et dans lequel
l'unité de réception (110) est configurée pour recevoir l'opération d'instruction de traitement à partir d'un autre dispositif de commande.

2. Dispositif de commande selon la revendication 1, dans lequel
l'unité d'enregistrement (120) est configurée pour enregistrer, conjointement avec une procédure, une série d'opérations désignées par un utilisateur.

3. Dispositif de commande selon la revendication 1 ou 2, dans lequel
l'affichage (220) est configuré pour mettre en évidence des informations indiquant une deuxième opération utilisateur qui suit la première opération utilisateur dans la série d'opérations enregistrées par l'unité d'enregistrement (120) lorsqu'une première opération utilisateur incluse dans la série d'opérations enregistrées par l'unité d'enregistrement (120) est effectuée.

4. Dispositif de commande selon l'une quelconque des revendications 1 à 3, dans lequel
l'affichage (220) est configuré pour afficher des informations à propos d'une position ordinale de chacune de la ou des opérations utilisateur enregistrées par l'unité d'enregistrement (120) dans la série d'opérations enregistrées par l'unité d'enregistrement (120), et des informations indiquant chacune de la ou des opérations utilisateur enregistrées par l'unité d'enregistrement (120).

5. Dispositif de commande selon l'une quelconque des revendications 1 à 4, dans lequel
l'unité d'enregistrement (120) est configurée pour stocker un intervalle de temps entre deux opérations utilisateur incluses dans la série d'opérations enregistrées par l'unité d'enregistrement (120).

6. Procédé de commande pour un dispositif de commande (10, 11, 12), le procédé comprenant :
l'enregistrement par une unité d'enregistrement (120) d'une série d'opérations incluant une ou plusieurs opérations utilisateur effectuées sur un dispositif de fabrication (40) ou un dispositif de test (40) conjointement avec une procédure ;
la réception par une unité de réception (110) à partir d'un autre dispositif de commande (10, 11, 12) d'une opération d'instruction de traitement pour charger une unité d'instruction de traitement (130) d'amener le dispositif de fabrication (40) ou le dispositif de test (40) à effectuer un traitement attribué à chacune de la ou des opérations utilisateur enregistrées par l'unité d'enregistrement en suivant la procédure enregistrée par l'unité d'enregistrement ;
l'affichage par un affichage (220) d'informations indiquant chacune de la ou des opérations utilisateur et d'informations indiquant la procédure enregistrée dans l'étape d'enregistrement ; et
lorsque l'unité de réception reçoit l'opération d'instruction de traitement, l'unité d'instruction de traitement amène le dispositif de fabrication (40) ou le dispositif de test (40) à effectuer un traitement attribué à chacune de la ou des opérations utilisateur enregistrées dans l'étape d'enregistrement en suivant la procédure enregistrée dans l'étape d'enregistrement.

7. Programme de traitement d'informations permettant à un ordinateur de fonctionner comme le dispositif de commande (10, 11, 12) selon l'une quelconque des revendications 1 à 5, le programme permettant à l'ordinateur de fonctionner comme les unités du dispositif de commande (10, 11, 12).
